# EUROPEAN PATENT APPLICATION

(11) **EP 4 637 230 A1**
(43) Date of publication of application: **22.10.2025**
(21) Application number: 23910664.4
(22) Date of filing: 26.12.2023
(51) Int. Cl.: H04W 60/04

(54) **REGISTRATION METHOD AND RELATED DEVICE**

(30) Priority: 31.12.2022 CN 202211737727
(71) Applicant: Huawei Technologies Co., Ltd., Shenzhen, Guangdong 518129 (CN)
(72) Inventor: HU, Xiaodong, Shenzhen, Guangdong 518129 (CN); ZONG, Zaifeng, Shenzhen, Guangdong 518129 (CN); YIN, Yu, Shenzhen, Guangdong 518129 (CN); LI, Guanglei, Shenzhen, Guangdong 518129 (CN)
(74) Representative: Pfenning, Meinig & Partner mbB
(86) International application number: PCT/CN2023/142131
(87) International publication number: WO 2024/140741

(57) **Abstract**

Embodiments of this application provide a registration method and a related device, and relate to the communication field. In the registration method, an access network device sends a first registration request to a first network element. The first registration request includes sensing identification information of the access network device. The first network element performs sensing authentication and/or sensing authorization on the access network device based on the sensing identification information of the access network device. The access network device receives a first registration response to the first registration request from the first network element. The first registration response includes an authentication result of the access network device and/or an authorization result of the access network device. In the registration method in embodiments of this application, the access network device may request, by initiating the first registration request, to register with the first network element, to implement registration of the access network device, so that the first network element can manage the access network device, for example, manage a sensing service of the access network device.

## Description

This application claims priority to Chinese Patent Application No. 202211737727.9, filed with the China National Intellectual Property Administration on December 31, 2022 and entitled "REGISTRATION METHOD AND RELATED DEVICE", which is incorporated herein by reference in its entirety.

### TECHNICAL FIELD

Embodiments of this application relate to the communication field, and in particular, to a registration method and a related device.

### BACKGROUND

A base station performs communication by using an electromagnetic wave. Sensing means performing detection on environment by using an electromagnetic wave, and receiving an electromagnetic wave echo for sensing. When the electromagnetic wave used for communication has a sense function, the base station has a sensing capability, and can perform sensing identification on a specific area/object/event, and the like. A 5G network may use the sensing capability of the base station as a new capability for various scenarios and requirements. However, a problem of how the base station registers with the network has not been resolved.

### SUMMARY

This application provides a registration method and a related device, to implement registration of an access network device, and facilitate management of a sensing service of the access network device.

According to a first aspect, a registration method is provided. The method includes the following steps: An access network device sends a first registration request to a first network element. The first registration request includes sensing identification information of the access network device, and the first registration request is used to trigger sensing authentication and/or sensing authorization on the access network device. The access network device receives a first registration response to the first registration request from the first network element. The first registration response includes an authentication result of the access network device and/or an authorization result of the access network device.

Therefore, in this application, the access network device may request, by initiating the first registration request, to register with the first network element, to implement registration of the access network device, so that the first network element can manage the access network device, for example, manage a sensing service of the access network device.

With reference to the first aspect, in some implementations of the first aspect, the sensing identification information includes any one of the following: identity ID information, subscription permanent identifier SUPI information, subscription concealed identifier SUCI information, international mobile subscriber identity IMSI information, permanent equipment identifier PEI information, international mobile equipment identity IMEI information, generic public subscription identifier GPSI information, and mobile subscriber international number MSISDN information.

With reference to the first aspect, in some implementations of the first aspect, when the first network element is a sensing network element, the access network device sends the first registration request to the first network element via an access and mobility management function network element.

Therefore, in this application, the access network device may send the first registration request via a control plane.

With reference to the first aspect, in some implementations of the first aspect, that the access network device sends the first registration request to the first network element via the access and mobility management function network element specifically includes:
The access network device sends a first message to the access and mobility management function network element, where the first message includes location area information of the access network device and the first registration request, so that the access and mobility management function network element determines the first network element based on the location area information of the access network device and sends the first registration request to the first network element.

Therefore, in this application, after the access and mobility management function network element determines the first network element, the access and mobility management function network element forwards the first registration request to the first network element.

With reference to the first aspect, in some implementations of the first aspect, before the access network device sends the first registration request to the first network element, the registration method further includes: The access network device determines the first network element.

Therefore, in this application, the access network device may first determine the first network element, and then send the first registration request to the first network element.

With reference to the first aspect, in some implementations of the first aspect, that the access network device determines the first network element includes: The access network device determines the first network element based on local network element configuration information. Alternatively, the access network device obtains a mapping relationship, where the mapping relationship is a correspondence between a network element and a serving location area of the network element; and determines the first network element based on the mapping relationship and the location area information of the access network device, where a location area indicated by the location area information of the access network device is located in a serving location area of the first network element.

Therefore, in this application, the access network device may directly determine the first network element based on the local network element configuration information, or search the mapping relationship based on the location area information of the access network device to determine the first network element.

With reference to the first aspect, in some implementations of the first aspect, the mapping relationship is obtained by the access network device from the access and mobility management function network element.

With reference to the first aspect, in some implementations of the first aspect, that the access network device obtains the mapping relationship includes: The access network device sends an access network device setting request to the access and mobility management function network element. The access network device receives a setting response from the access and mobility management function network element. The setting response includes the mapping relationship.

Therefore, in this application, the access and mobility management function network element may deliver the mapping relationship to the access network device when responding to the access network device setting request of the access network device.

With reference to the first aspect, in some implementations of the first aspect, the first registration request is sent by the access network device to the first network element via a first message.

With reference to the first aspect, in some implementations of the first aspect, the first registration request further includes at least one of the following: location information of the access network device, sensing area information of the access network device, sensing quality of service information of the access network device, a sensing type additionally supported by the access network device, and a channel model parameter of the access network device.

With reference to the first aspect, in some implementations of the first aspect, the registration method further includes: The access network device receives a sensing request from a sensing demander. The sensing demander includes at least one of the following: the first network element, an application service function network element, or a terminal device. The access network device obtains sensing data based on the sensing request. The access network device provides the sensing data for the sensing demander.

Therefore, in this application, the access network device may perform sensing in response to the sensing request from the sensing demander, to obtain the sensing data, and provide the sensing data for the sensing demander.

With reference to the first aspect, in some implementations of the first aspect, the registration method further includes: The access network device sends a first sensing update request to the first network element or a second network element. The first sensing update request is used to request the first network element or the second network element to update sensing capability information of the access network device. The access network device receives a first sensing update response sent by the first network element or the second network element.

Therefore, in this application, when a sensing capability of the access network device changes, the access network device may update the sensing capability information of the access network device to the first network element or the second network element.

With reference to the first aspect, in some implementations of the first aspect, the registration method further includes the following steps: The access network device receives a second registration request of the terminal. The second registration request includes a sensing node indication, and the sensing node indication indicates that the terminal is configured to perform sensing. The access network device sends a second message to the access and mobility management function network element, where the second message includes the second registration request, so that the access and mobility management function network element performs authentication and/or authorization on the terminal based on the second registration request. The access network device receives a second message response from the access and mobility management function network element. The second message response includes an authentication result of the terminal and/or an authorization result of the terminal.

Therefore, in this application, the terminal may request, by initiating the second registration request to the access network device, to register with the access network device, to implement registration of the terminal, so that the access network device can manage the terminal, for example, manage a sensing service of the terminal.

With reference to the first aspect, in some implementations of the first aspect, the registration method further includes: The access network device sends a second registration response to the second registration request to the terminal. The second registration response is obtained based on the second message response.

With reference to the first aspect, in some implementations of the first aspect, the registration method further includes: The access network device sends at least one of the following information to the terminal: configuration information of the terminal, sensing configuration information of the terminal, sensing authorization indication information, and sensing identification information of the terminal.

With reference to the first aspect, in some implementations of the first aspect, the registration method further includes: The access network device sends a sensing configuration request to the terminal. The sensing configuration request includes configuration information associated with the sensing service of the terminal. The access network device receives a sensing configuration response of the terminal.

Therefore, in this application, the access network device may configure the sensing service of the terminal, which is specifically implemented by sending the sensing configuration request to the terminal. The sensing configuration request carries the configuration information of the sensing service of the terminal. After receiving the sensing configuration request, the terminal configures the sensing service of the terminal based on the configuration information, and sends the sensing configuration response to the access network device, so that the access network device learns that the terminal has completed configuration and learns of specific configuration information.

With reference to the first aspect, in some implementations of the first aspect, the configuration information includes at least one of the following: a sensing bandwidth, sensing frequency band indication information, sensing quality of service indication information, a sensing detection distance, sensing power, a sensing data reporting format, reporting indication information for sensing data quality information, a sensing detection sensitivity level, and sensing identification information of the terminal.

With reference to the first aspect, in some implementations of the first aspect, the sensing configuration response includes at least one of the following: the sensing identification information of the terminal, sensing area information of the terminal, sensing quality of service information of the terminal, a sensing type additionally supported by the terminal, location information of the terminal, and a channel model parameter of the terminal.

With reference to the first aspect, in some implementations of the first aspect, that the access network device sends the first sensing update request to the first network element or the second network element includes: When it is determined, based on the authentication result of the terminal and/or the authorization result of the terminal, that the terminal performs registration successfully, the access network device sends the first sensing update request to the first network element or the second network element.

Therefore, in this application, after the terminal completes registration, the sensing capability information of the access network device changes, and the access network device may update the sensing capability information of the access network device to the first network element or the second network element.

According to a second aspect, this application further provides a registration method. The method includes the following steps: A first network element receives a first registration request from an access network device. The first registration request includes sensing identification information of the access network device. The first network element performs sensing authentication and/or sensing authorization on the access network device based on the sensing identification information of the access network device. The first network element sends a first registration response to the access network device. The first registration response includes an authentication result of the access network device and/or an authorization result of the access network device.

Therefore, in this application, the access network device may request, by initiating the first registration request, to register with the first network element, to implement registration of the access network device, so that the first network element can manage the access network device, for example, manage a sensing service of the access network device.

With reference to the second aspect, in some implementations of the second aspect, the sensing identification information includes any one of the following: identity ID information, subscription permanent identifier SUPI information, subscription concealed identifier SUCI information, international mobile subscriber identity IMSI information, permanent equipment identifier PEI information, international mobile equipment identity IMEI information, generic public subscription identifier GPSI information, and mobile subscriber international number MSISDN information.

With reference to the second aspect, in some implementations of the second aspect, that the first network element performs sensing authentication and/or sensing authorization on the access network device based on the sensing identification information of the access network device specifically includes: The first network element locally performs sensing authentication and/or sensing authorization on the access network device based on the sensing identification information of the access network device. Alternatively, the first network element performs sensing authentication and/or sensing authorization on the access network device based on the sensing identification information of the access network device via a third network element.

Therefore, in this application, the first network element or the third network element may perform sensing authentication processing and/or sensing authorization processing on the access network device based on the sensing identification information of the access network device.

With reference to the second aspect, in some implementations of the second aspect, the registration method further includes: The first network element sends a second sensing update request to the second network element. The second sensing update request is used to request the second network element to update sensing capability information of the first network element. The first network element receives a second sensing update response sent by the second network element.

Therefore, in this application, after the access network device registers with the first network element, the first network element may update the sensing capability information of the first network element to the second network element, namely, sensing capability information of the newly registered access network device.

With reference to the second aspect, in some implementations of the second aspect, when the first network element is a sensing network element, the first registration request is sent by the access network device to the first network element via an access and mobility management function network element.

Therefore, in this application, the access network device may initiate the first registration request to the sensing network element via a control plane.

With reference to the second aspect, in some implementations of the second aspect, the first registration request is sent by the access network device to the first network element via a first message.

With reference to the second aspect, in some implementations of the second aspect, the first registration request further includes at least one of the following: location information of the access network device, sensing area information of the access network device, sensing quality of service information of the access network device, a sensing type additionally supported by the access network device, and a channel model parameter of the access network device.

With reference to the second aspect, in some implementations of the second aspect, the registration method further includes: The first network element receives a first sensing update request sent by the access network device. The first sensing update request is used to request the first network element to update sensing capability information of the access network device. The first network element sends a first sensing update response to the access network device.

Therefore, in this application, when a sensing capability of the access network device changes, the access network device may update the sensing capability information of the access network device to the first network element or the second network element.

With reference to the second aspect, in some implementations of the second aspect, the registration method further includes: The first network element sends a sensing request to the access network device. The first network element receives a sensing response sent by the access network device.

With reference to the second aspect, in some implementations of the second aspect, the sensing request is obtained by the first network element from a fourth network element.

According to a third aspect, this application further provides a registration method. The registration method includes the following steps: An access network device receives a second registration request of a terminal. The second registration request includes a sensing indication, and the sensing indication indicates that the terminal is configured to perform sensing. The access network device sends a second message to an access and mobility management function network element. The second message includes the second registration request, and the second registration request is used to trigger sensing authentication and/or sensing authorization on the terminal. The access network device receives a second message response from the access and mobility management function network element. The second message response includes an authentication result of the terminal and/or an authorization result of the terminal.

Therefore, in this application, the terminal may request, by initiating the second registration request to the access network device, to register with the access network device, to implement registration of the terminal, so that the access network device can manage the terminal, for example, manage a sensing service of the terminal.

With reference to the third aspect, in some implementations of the third aspect, the registration method further includes: The access network device sends a second registration response to the second registration request to the terminal. The second registration response is obtained based on the second message response.

With reference to the third aspect, in some implementations of the third aspect, the registration method further includes: The access network device sends at least one of the following information to the terminal: configuration information of the terminal, sensing configuration information of the terminal, sensing authorization indication information, and sensing identification information of the terminal.

With reference to the third aspect, in some implementations of the third aspect, the registration method further includes: The access network device sends a sensing configuration request to the terminal. The sensing configuration request includes configuration information associated with the sensing service of the terminal. The access network device receives a sensing configuration response of the terminal.

Therefore, in this application, the access network device may configure the sensing service of the terminal, which is specifically implemented by sending the sensing configuration request to the terminal. The sensing configuration request carries the configuration information of the sensing service of the terminal. After receiving the sensing configuration request, the terminal configures the sensing service of the terminal based on the configuration information, and sends the sensing configuration response to the access network device, so that the access network device learns that the terminal has completed configuration and learns of specific configuration information.

With reference to the third aspect, in some implementations of the third aspect, the configuration information includes at least one of the following: a sensing bandwidth, sensing frequency band indication information, sensing quality of service indication information, a sensing detection distance, sensing power, a sensing data reporting format, reporting indication information for sensing data quality information, a sensing detection sensitivity level, and the sensing identification information of the terminal.

With reference to the third aspect, in some implementations of the third aspect, the sensing configuration response includes at least one of the following: the sensing identification information of the terminal, sensing area information of the terminal, sensing quality of service information of the terminal, a sensing type additionally supported by the terminal, location information of the terminal, and a channel model parameter of the terminal.

With reference to the third aspect, in some implementations of the third aspect, the registration method further includes: The access network device sends a first sensing update request to a first network element or a second network element. The first sensing update request is used to request the first network element or the second network element to update sensing capability information of the access network device. The access network device receives a first sensing update response sent by the first network element or the second network element.

Therefore, in this application, when the sensing capability information of the access network device changes, the access network device may update the sensing capability information of the access network device to the first network element or the second network element.

With reference to the third aspect, in some implementations of the third aspect, that the access network device sends the first sensing update request to the first network element or the second network element includes: When it is determined, based on the authentication result and/or the authorization result, that the terminal performs registration successfully, the access network device sends the first sensing update request to the first network element or the second network element.

Therefore, in this application, after the terminal completes registration, the sensing capability information of the access network device changes, and the access network device may update the sensing capability information of the access network device to the first network element or the second network element.

According to a fourth aspect, this application further provides a registration method. The method includes: A terminal sends a second registration request to an access network device. The second registration request includes a sensing indication, the sensing indication indicates that the terminal is configured to perform sensing, and the second registration request is used to trigger sensing authentication and/or sensing authorization on the terminal. The terminal receives a second registration response sent by the access network device. The second registration response is obtained based on an authentication result of the terminal and/or an authorization result of the terminal that are/is from an access and mobility management function network element.

Therefore, in this application, the terminal may request, by initiating the second registration request to the access network device, to register with the access network device, to implement registration of the terminal, so that the access network device can manage the terminal, for example, manage a sensing service of the terminal.

With reference to the fourth aspect, in some implementations of the fourth aspect, the registration method further includes:
The terminal receives a sensing configuration request sent by the access network device or a fifth network element. The sensing configuration request includes configuration information associated with a sensing service of the terminal. The terminal configures the sensing service based on the configuration information. The terminal sends a sensing configuration response to the access network device or the fifth network element.

Therefore, in this application, the access network device may configure the sensing service of the terminal, which is specifically implemented by sending the sensing configuration request to the terminal. After receiving the sensing configuration request, the terminal configures the sensing service of the terminal based on the configuration information, and sends the sensing configuration response to the access network device, so that the access network device learns that the terminal has completed configuration and learns of specific configuration information.

With reference to the fourth aspect, in some implementations of the fourth aspect, the registration method further includes: The terminal configures a sensing service based on local configuration information.

Therefore, in this application, the terminal may configure the sensing service based on locally stored configuration information associated with the sensing service of the terminal.

With reference to the fourth aspect, in some implementations of the fourth aspect, the configuration information includes at least one of the following: a sensing bandwidth, sensing frequency band indication information, sensing quality of service indication information, a sensing detection distance, sensing power, a sensing data reporting format, reporting indication information for sensing data quality information, a sensing detection sensitivity level, and sensing identification information of the terminal.

With reference to the fourth aspect, in some implementations of the fourth aspect, the sensing configuration response includes at least one of the following: the sensing identification information of the terminal, sensing area information of the terminal, sensing quality of service information of the terminal, a sensing type additionally supported by the terminal, location information of the terminal, and a channel model parameter of the terminal.

With reference to the fourth aspect, in some implementations of the fourth aspect, the registration method further includes: The terminal receives a sensing request sent by the access network device. The terminal performs sensing in response to the sensing request to obtain sensing data. The terminal sends a sensing response to the access network device.

With reference to the fourth aspect, in some implementations of the fourth aspect, the registration method further includes: The terminal receives at least one of the following information sent by the access network device: configuration information of the terminal, sensing configuration information of the terminal, sensing authorization indication information, and sensing identification information of the terminal.

According to a fifth aspect, this application further provides a registration apparatus, including a unit configured to perform the method according to the first aspect.

According to a sixth aspect, this application further provides a registration apparatus, including a unit configured to perform the method according to the second aspect.

According to a seventh aspect, this application further provides a registration apparatus, including a unit configured to perform the method according to the third aspect.

According to an eighth aspect, this application further provides a registration apparatus, including a unit configured to perform the method according to the fourth aspect.

According to a ninth aspect, this application further provides a communication apparatus, including a processor. The processor is coupled to a memory, the memory is configured to store a computer program or instructions, and the processor is configured to execute the computer program or the instructions, so that the communication apparatus performs the method according to any one of the first aspect, the second aspect, the third aspect, and the fourth aspect.

According to a tenth aspect, this application further provides a computer-readable storage medium, including a computer program. When the computer program is run on a computer, the computer is caused to perform the method according to any one of the first aspect, the second aspect, the third aspect, and the fourth aspect.

According to an eleventh aspect, this application further provides a computer program product. When the computer program product runs on a computer, the computer is caused to perform the method according to any one of the first aspect, the second aspect, the third aspect, and the fourth aspect.

According to a twelfth aspect, this application further provides a chip system, including a processor, configured to invoke a computer program from a memory and run the computer program, so that a communication device on which the chip system is mounted performs the method according to any one of the first aspect, the second aspect, the third aspect, and the fourth aspect.

Optionally, in an implementation, the chip system may further include a memory, and the memory stores the computer program.

According to a thirteenth aspect, this application further provides a registration system, including the apparatus according to the fifth aspect and the apparatus according to the sixth aspect.

According to a fourteenth aspect, this application further provides a registration system, including the apparatus according to the seventh aspect and the apparatus according to the eighth aspect.

### BRIEF DESCRIPTION OF DRAWINGS

The following describes the accompanying drawings used in embodiments of this application.
FIG. 1 is a diagram applicable to a method according to an embodiment of this application;
FIG. 2 is a diagram of a network architecture according to an embodiment of this application;
FIG. 3A is a schematic flowchart of a registration method according to an embodiment of this application;
FIG. 3B is a schematic flowchart of another registration method according to an embodiment of this application;
FIG. 3C is a schematic flowchart of another registration method according to an embodiment of this application;
FIG. 3D is a schematic flowchart of another registration method according to an embodiment of this application;
FIG. 3E is a schematic flowchart of an information update according to an embodiment of this application;
FIG. 3F is a schematic flowchart of another information update according to an embodiment of this application;
FIG. 4A is a schematic flowchart of another registration method according to an embodiment of this application;
FIG. 4B is a schematic flowchart of another registration method according to an embodiment of this application;
FIG. 4C is a schematic flowchart of configuration of a terminal according to an embodiment of this application;
FIG. 5A is a schematic flowchart of a sensing service according to an embodiment of this application;
FIG. 5B is a schematic flowchart of another sensing service according to an embodiment of this application;
FIG. 5C is a schematic flowchart of another sensing service according to an embodiment of this application;
FIG. 6 is a diagram of a structure of a registration apparatus according to an embodiment of this application;
FIG. 7 is a diagram of a structure of another registration apparatus according to an embodiment of this application;
FIG. 8 is a diagram of a structure of another registration apparatus according to an embodiment of this application;
FIG. 9 is a diagram of a structure of another registration apparatus according to an embodiment of this application; and
FIG. 10 is a diagram of a structure of a communication apparatus according to an embodiment of this application.

### DESCRIPTION OF EMBODIMENTS

The following describes the technical solutions of this application with reference to the accompanying drawings.

Embodiments of this application relate to an application. Therefore, for ease of understanding, the following first describes related concepts such as related terms in embodiments of this application.

In embodiments of this application, the term like "example" or "for example" is used to represent giving an example, an illustration, or a description. Any embodiment or design scheme described as "example" or "for example" in this application should not be explained as being more preferred or having more advantages than another embodiment or design scheme. Exactly, use of the word like "example" or "for example" is intended to present a related concept in a specific manner.

In embodiments of this application, "at least one" means one or more, and "a plurality of" means two or more. "At least one of the following items (pieces)" or an expression similar thereto means any combination of these items, including a singular item (piece) or any combination of plural items (pieces). For example, at least one of a, b, or c may represent: a, b, c, (a and b), (a and c), (b and c), or (a, b, and c), where a, b, and c may be singular or plural. "And/or" describes an association relationship between associated objects, and represents that three relationships may exist. For example, A and/or B may represent the following three cases: Only A exists, both A and B exist, and only B exists, where A and B may be singular or plural. The character "/" generally represents an "or" relationship between the associated objects. Sequence numbers of steps (for example, step S1 and step S21) in embodiments of this application are merely used to distinguish between different steps, and do not limit an execution sequence of the steps.

In addition, unless otherwise stated, ordinal numbers such as "first" and "second" in embodiments of this application are for differentiation between a plurality of objects, but are not intended to limit an order, a time sequence, priorities, or importance of the plurality of obj ects. For example, a first device and a second device are merely for ease of description, and do not represent a difference in a structure, importance, and the like of the first device and the second device. In some embodiments, the first device and the second device may alternatively be a same device.

According to the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

A method in embodiments of this application may be applied to a long term evolution (long term evolution, LTE) technology system, a long term evolution-advanced (long term evolution-advanced, LTE-A) technology system, an enhanced long term evolution (enhanced long term evolution-advanced, eLTE) technology system, a 5th generation (the 5th Generation, 5G) mobile communication system new radio (New Radio, NR) system, or a future communication network like a 6th generation (the 6th Generation, 6G) mobile communication system, or may also be extended to similar wireless communication systems such as cellular systems related to wireless fidelity (wireless fidelity, Wi-Fi), worldwide interoperability for microwave access (worldwide interoperability for microwave access, WiMAX), and 3rd generation partnership project (3rd generation partnership project, 3GPP).

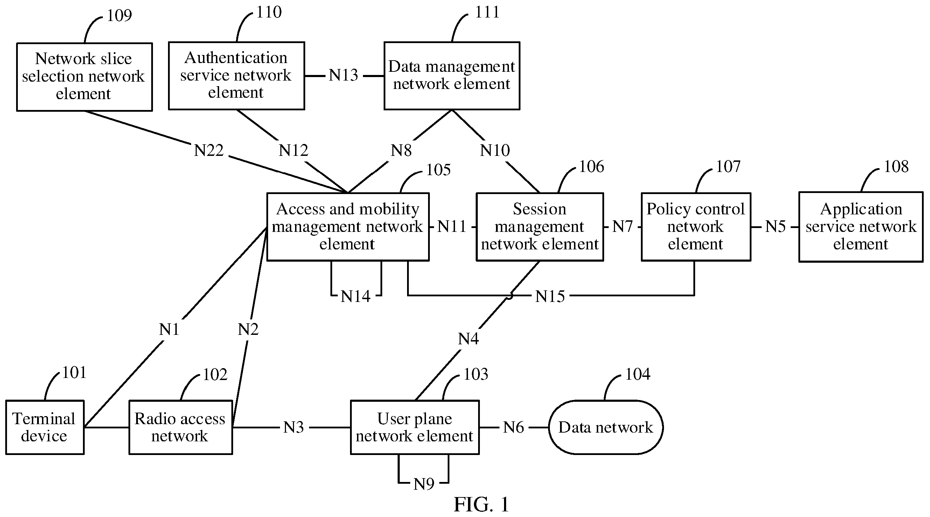

With the update of mobile communication technologies, a 5G network is constructed in a flexible and efficient manner. The 5G network may use a communication sensing capability as a new capability. For example, a system architecture of the 5G network may be shown in FIG. 1.

FIG. 1 shows a network architecture applied to an embodiment of this application. Network elements that may be used in the network architecture are separately described.
1. Terminal device 101: The terminal device 101 is referred to as a terminal for short, and is also referred to as a user equipment (user equipment, UE). The terminal device 101 may include various handheld devices, vehicle-mounted devices, wearable devices, and computing devices that have a wireless communication function or other processing devices connected to a wireless modem, and terminals in various forms such as a mobile station (mobile station, MS), a terminal (terminal), a soft terminal, an access terminal, a terminal device unit (subscriber unit), a terminal device station, a mobile station (mobile station, MS), a remote station, a remote terminal, a mobile device, a terminal device agent, a terminal device apparatus, and the like. For example, the terminal device 101 may be a water meter, an electricity meter, or a sensor.

In this embodiment of this application, the terminal device 101 may further have a sensing capability. The terminal device 101 may be a sensing terminal (sensing UE), a sensing unit (sensing unit), or a sensing equipment (sensing equipment). For example, a radio frequency module of the terminal device may send a radio frequency signal, and then learn of an environment by receiving and processing a reflected signal. Therefore, in this application, the terminal device may perform detection and/or collection of sensing data.

For example, the terminal device 101 may alternatively be a relay terminal (relay UE), a remote terminal (remote UE), a reference terminal (reference UE), an integrated access and backhaul (integrated access and backhaul, IAB) node, or an RN (relay node). The IAB node may access a RAN in a wired or wireless manner, and may share a 3GPP signal, so that another terminal can access a 3GPP system via the IAB node. In other words, the IAB node supports wireless relay of access traffic on an NR air interface (referred to as an air interface for short) through an NR air interface backhaul link.

2. Radio access network (radio access network, RAN) 102: The radio access network 102 is a network including a plurality of RAN nodes, and can implement a radio physical layer function, resource scheduling and radio resource management, radio access control, and a mobility management function. The RAN 102 is connected to a user plane network element 103 through a user plane interface N3, and is configured to transfer data of a terminal device. The RAN 102 establishes a control plane signaling connection to an access and mobility management network element 105 through a control plane interface N2, to implement a function like radio access bearer control.

Specifically, the RAN 102 may be configured to provide a network access function for an authorized terminal device in a specific area, and can use transmission tunnels of different quality based on a level of the terminal device, a service requirement, and the like.

The RAN 102 can manage a radio resource, provide an access service for the terminal device, and further complete forwarding of a control signal and the data of the terminal device between the terminal device and a core network.

The radio access network is interchangeable with access network device or access network (access network, AN). The access network device may be a base station, a further evolved NodeB (gNB), an evolved NodeB (evolved NodeB, eNB), a transmission reception point (transmission reception point, TRP), a central unit (central unit, CU) node, a distributed unit (distributed unit, DU) node, a transmission point (transmission point, TP), a receiving point (receiving point, RP), a sensing communication satellite, and the like. This is not limited. In this application, the radio access network is described by using a base station as an example, and a function performed by the base station is also applicable to another interchangeable expression of the radio access network.

In this application, when the base station performs wireless communication by using an electromagnetic wave (for example, a millimeter wave, a terahertz, or visible light), the base station naturally has a sensing capability similar to that of a radar, in other words, the base station has both a wireless communication capability and the sensing capability. Therefore, in this application, the RAN 102 may perform detection and/or collection of sensing data. The RAN 102 in this application may also be referred to as a communication radar integrated base station or a sensing base station. The RAN 102 can not only cover a communication service of a ground user, but also perform sensing and detection on a flight target like an unmanned aerial vehicle, a helicopter, or a bird, and a traffic volume, a pedestrian, or the like on the ground.

When the base station has the sensing capability brought by the electromagnetic wave like the millimeter wave, a wireless communication system may perform sensing identification on a specific area, object, or event, to meet sensing requirements in many scenarios.

The following describes some examples of application scenarios having sensing requirements in the communication field.

### (1) Autonomous driving:

### Scenario 1 (V2X, UAV, and MAV):

The V2X represents vehicle-to-everything (vehicle-to-everything), the UAV represents an unmanned aerial vehicle (unmanned aerial vehicle), and the MAV represents a manned aerial vehicle (manned aerial vehicle).

Because a sensing distance of a vehicle, an unmanned aerial vehicle, or a manned aerial vehicle is short or a non-line-of-sight (non-line-of-sight, NLOS) path cannot be sensed, a dynamic map may be generated based on sensing.

### Scenario 2 (V2X, UAV, and MAV):

During a travelling process of a vehicle, an unmanned aerial vehicle, or a manned aerial vehicle, if a dangerous event like sudden appearance of a person or an object occurs, the dangerous event may be identified based on sensing and a UE may be notified of performing an emergency operation.

### Scenario 3 (V2X, UAV, and MAV):

If a vehicle, an unmanned aerial vehicle, or a manned aerial vehicle is assisted by autonomous driving, a customized dynamic high definition map is generated based on sensing to assist a UE in autonomous driving.

### (2) Security supervision:

### Scenario 1 (V2X, UAV, and MAV):

If driving violation occurs, for example, a vehicle occupies an emergency lane, or an unmanned aerial vehicle or a manned aerial vehicle leaves a route, the vehicle violation may be identified based on sensing and real-time alarming or post-event punishment may be performed.

Scenario 2 (national railway perimeter, UAV, and MAV): If a foreign object enters into a railway track, or an unmanned aerial vehicle or a manned aerial vehicle enters into a no-fly zone (for example, an airport), the violation object may be identified and tracked based on sensing and real-time emergency handling may be performed.

### (3) Family health:

Scenario 1: In detection of an abnormal posture like falling down of a person, the abnormal posture may be identified based on sensing and an alert may be generated.

Scenario 2: In detection of health such as human breath/heartbeat, an abnormal indicator may be identified based on sensing and an alert may be generated.

(4) Meteorological monitoring: Sensing and prediction are performed on changes of environment, climate, and weather.

3. Access and mobility management function network element 105: The access and mobility management function network element 105 is mainly used for mobility management, access management, and the like, and may be configured to implement other functions except session management in functions of a mobility management entity (mobility management entity, MME), for example, lawful interception, access authorization/authentication, and the like.

In a 5G communication system, the access and mobility management function network element may be an access and mobility management function (access and mobility management function, AMF) network element. In a future communication system, the access and mobility management function network element may still be an AMF network element, or may have another name. This is not limited in this application.

The AMF is mainly responsible for functions such as UE authentication, UE mobility management, network slice selection, and session management network element selection; serves as an anchor point for N1 and N2 signaling connections and provides routes for N1/N2 session management (session management, SM) messages for a session management network element; and maintains and manages UE status information.

4. Session management network element 106: The session management network element 106 is mainly configured for session management, terminal device internet protocol (internet protocol, IP) address allocation and management, selection and control of a user plane function, termination of interfaces towards policy control and charging functions, downlink data notification, and the like.

In a 5G communication system, the session management network element may be a session management function (session management function, SMF) network element. In a future communication system, the session management network element may still be an SMF network element, or may have another name. This is not limited in this application.

The SMF is mainly responsible for all control plane functions of UE session management, including user plane network element selection, IP address allocation, session QoS management, obtaining of policy and charging control (policy and charging control, PCC) information (from a policy control network element), and the like.

5. User plane network element 103: The user plane network element 103 is used for packet routing and forwarding, quality of service (quality of service, QoS) handling for user plane data, and the like.

In a 5G communication system, the user plane network element may be a user plane function (user plane function, UPF) network element. In a future communication system, the user plane network element may still be a UPF network element, or may have another name. This is not limited in this application.

The UPF mainly provides a service processing function of a user plane. As an anchor point of a protocol data unit (protocol data unit, PDU) session connection, the UPF is responsible for data packet filtering, service routing, packet forwarding, an anchoring function, and rate control of a user equipment, charging information generation, QoS mapping and enforcement, uplink identifier identification and routing to a data network, downlink packet buffering and notification triggering of downlink data arrival, connection to an external data network, and the like.

6. Data management network element 111: The data management network element 111 is used for terminal device identification handling, access authentication, registration and mobility management, and the like.

In a 5G communication system, the data management network element may be a unified data management (unified data management, UDM) network element. In a future communication system, the data management network element may still be a UDM network element, or may have another name. This is not limited in this application.

The UDM network element is mainly used for user data management and control, for example, subscription information management, including obtaining subscription information from a data repository and providing the subscription information for another network element (for example, an AMF); generation of 3GPP authentication credentials for a UE; and registration and maintenance of a network element that currently serves the UE (for example, an AMF represented by an AMF ID 1 is a current serving AMF of the UE).

7. Data repository: The data repository is configured to store user data.

In a 5G communication system, the data repository may be a unified data repository (Unified Data Repository, UDR). In a future communication system, the data repository may still be a UDR, or may have another name. This is not limited in this application.

The UDR is mainly configured to store user data, including subscription data invoked by a data management network element 111, policy information invoked by a policy control network element 107, structured data used for capability exposure, and application data invoked by a network capability exposure function (network exposure function, NEF) network element.

8. Network capability exposure network element: The network capability exposure network element is used for connection and interaction between another internal network element of a core network and an external application server of the core network, to provide network capability information for the external application server, or provide information from the external application server for the core network element.

In a 5G communication system, the network capability exposure network element may be an NEF network element. In a future communication system, the network capability exposure network element may still be an NEF, or may have another name. This is not limited in this application.

9. Application service network element 108: The application service network element 108 interacts with a core network element to provide some services, for example, interacts with a policy control network element 107 to perform service policy control, interacts with a network capability exposure network element to obtain some network capability information or provide some application information for a network, and provides some data network access point information for the policy control network element 107 to generate routing information of a corresponding data service.

In a 5G communication system, the application service network element may be an application service function (Application Function, AF) network element. In a future communication system, the application service network element may still be an AF network element, or may have another name. This is not limited in this application. For example, the application service network element is interchangeable with any one of the following: application server (application server, AS), AF, third party, third-party application, sensing application, sensing client, application (application, APP), over the top (over the top, OTT) application, and the like. OTT represents providing various application services for a user via the internet. The OTT application is an upper-layer application on a bearer network, for example, WeChat, Alipay, or Youku.

10. Authentication service network element 110: The authentication service network element 110 is configured to perform security authentication on a UE when the UE accesses a network.

In a 5G communication system, the authentication service network element may be an authentication server function (authentication server function, AUSF) network element. In a future communication system, the authentication service network element may still be an AUSF network element, or may have another name. This is not limited in this application.

The 5G communication system is used as an example. For example, the AUSF receives a request of an AMF for performing identity authentication on the UE, requests a key from a UDM, and then forwards, to the AMF, the key delivered by the UDM for authentication processing.

11. Network slice selection network element 109: The network slice selection network element 109 is configured to select a set of slice instances for a UE, and determine an AMF set and allowed NSSAI for the UE (the NSSAI is short for network slice selection assistance information, namely, network slice selection auxiliary information/network slice selection assistance information, where a network slice is uniquely identified by a single piece of S-NSSAI, and a set of one or more pieces of S-NSSAI is referred to as NSSAI).

In a 5G communication system, the network slice selection network element may be a network slice selection function (network slice selection function, NSSF) network element. In a future communication system, the network slice selection network element may still be an NSSF network element, or may have another name. This is not limited in this application.

12. Policy control network element 107: The policy control network element 107 is used for a unified policy framework to govern network behavior, providing configuration policy information for a UE, providing policy rule information for a control plane function network element (for example, an AMF or an SMF network element), and the like.

In a 5G communication system, the policy control network element may be a policy control function (policy control function, PCF) network element. In a future communication system, the policy control network element may still be a PCF network element, or may have another name. This is not limited in this application.

13. Data network 104: The data network 104 is configured to provide a network for data transmission.

In a 5G communication system, the data network may be a data network (data network, DN). In a future communication system, the data network may still be a DN, or may have another name. This is not limited in this application.

It should be noted that the foregoing "network element" may also be referred to as an entity, a device, an apparatus, a module, or the like. This is not particularly limited in this application. In addition, in this application, for ease of understanding and description, descriptions of "network element" are omitted in some descriptions. For example, the AMF network element is referred to as an AMF for short. In this case, the "AMF" should be understood as an AMF network element or an AMF entity. Descriptions of same or similar cases are omitted below.

The network architecture may further include a location management service (location management service, LMF) network element, which may initiate a positioning procedure of the terminal device to obtain location information of the terminal device.

The network architecture may further include an operation, administration, and maintenance (operation, administration, and maintenance, OAM) network element. The OAM network element classifies network management work into three categories based on an actual requirement of operator network operation: operation (operation), administration (administration), and maintenance (maintenance). The operation is mainly to complete routine analysis, prediction, planning, and configuration for networks and services, and the maintenance is mainly routine operation activities such as network and service tests and fault management.

In this application, the network architecture may further include a sense function (sense function, SF) network element, which is referred to as a sensing network element for short. The sensing network element is responsible for an end-to-end enabling sensing service. For example, the sensing network element obtains a sensing requirement based on an internal requirement of the network or a requirement of a demander of the sensing service. After obtaining the sensing requirement, the sensing network element triggers the radio access network and the like to perform detection and/or collection of the sensing data.

It should be noted that, in a 5G network, the sensing network element may be one of network elements of the 5G core (5G core, 5GC) network. Alternatively, the sensing network element may be a non-core network element. Alternatively, the sensing network element may be independently deployed, or may be a sub-network element or a module in a network element of the 5G core network. For example, the sensing network element may be deployed together with the AMF network element or the LMF network element. For another example, the sensing network element may alternatively be deployed together with the access network device. Alternatively, the sensing network element may be deployed together with the AMF and the access network device. This is not particularly limited in this application.

In FIG. 1, N1, N2, N3, N4, N6, and the like are interface sequence numbers. Names and functions of interfaces between network elements are as follows:
(1) N1: N1 is an interface between the AMF and the terminal device, and may be configured to transfer a QoS control rule and the like to the terminal device.
(2) N2: N2 is an interface between the AMF and the RAN, and may be configured to transfer radio bearer control information or the like from a core network side to the RAN.
(3) N3: N3 is an interface between the RAN and the UPF, and is mainly configured to transfer uplink and downlink user plane data between the RAN and the UPF.
(4) N4: N4 is an interface between the SMF and the UPF, and may be configured to transfer information between a control plane and a user plane, including delivering a forwarding rule, a QoS control rule, a traffic statistical rule, or the like from the control plane to the user plane, and reporting information about the user plane.
(5) N5: N5 is an interface between the AF and the PCF, and may be configured to deliver an application service request and report a network event.
(6) N6: N6 is an interface between the UPF and the DN, and is configured to transfer uplink and downlink user data flows between the UPF and the DN.
(7) N7: N7 is an interface between the PCF and the SMF, and may be configured to deliver control policies at a protocol data unit (protocol data unit, PDU) session granularity and a service data flow granularity.
(8) N8: N8 is an interface between the AMF and the UDM, and may be used by the AMF to obtain, from the UDM, access and mobility management-related subscription data and authentication data, used by the AMF to register current mobility management-related information of the terminal with the UDM, and the like.
(9) N9: N9 is a user plane interface between UPFs, and is configured to transfer uplink and downlink user data flows between the UPFs.
(10) N10: N10 is an interface between the SMF and the UDM, and may be used by the SMF to obtain, from the UDM, session management-related subscription data, used by the SMF to register current session-related information of the terminal with the UDM, and the like.
(11) N11: N11 is an interface between the SMF and the AMF, and may be configured to transfer PDU session tunnel information between the RAN and the UPF, transfer a control message sent to the terminal, transfer radio resource control information sent to the RAN, and the like.
(12) N12: N12 is an interface between the AMF and the AUSF, and may be used by the AMF to initiate an authentication procedure to the AUSF, where an SUCI may be carried as a subscription identifier.
(13) N13: N13 is an interface between the UDM and the AUSF, and may be used by the AUSF to obtain a user authentication vector from the UDM, to perform an authentication procedure.
(14) N14: N14 is an interface between AMFs.
(15) N22: N22 is an interface between the AMF and the NSSF.

It should be understood that the foregoing network architecture applied to this embodiment of this application is merely an example of a network architecture described from the perspective of a service architecture, and a network architecture applicable to embodiments of this application is not limited thereto. Any network architecture that can implement functions of the foregoing network elements is applicable to embodiments of this application.

For example, in some network architectures, network function entities such as an AMF, an SMF, a PCF, a GMF, and a UDM are all referred to as network function (Network Function, NF) network elements. Alternatively, in some other network architectures, a set of network elements such as an AMF, an SMF, a PCF, a GMF, and a UDM may all be referred to as control plane function (Control Plane Function, CPF) network elements.

In this application, the proposed sensing network element may communicate with another network element. For example, the sensing network element may communicate with network elements such as a RAN network element, an AMF network element, an SMF network element, and an LMF network element.

The following uses network elements in a 5G system as an example to describe specific details of a solution. It may be understood that, when the solution is used in an LTE system or a future communication system, each network element in the solution may be replaced with another network element having a corresponding function. This is not limited in this application.

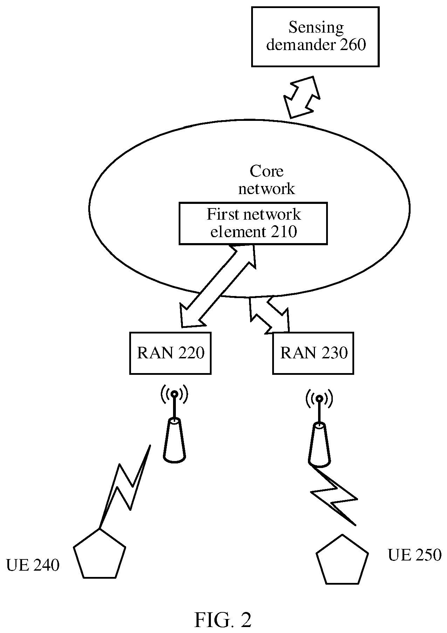

FIG. 2 shows a network architecture to which an embodiment of this application is applicable. The network architecture includes a first network element and at least one RAN. For example, the network architecture further includes at least one UE. For example, the first network element 210, a RAN 220, a RAN 230, a UE 240, and a UE 250 are shown in FIG. 2. In this embodiment of this application, the first network element may be a sensing network element, or the first network element may be an AMF.

In this application, the RAN 220 may directly register with the first network element 210, and the RAN 230 may also register with the first network element 210 via another network element in a core network, so that the first network element 210 can manage the RAN 220 or the RAN 230. In addition, the UE 240 may register with the RAN 220, so that the RAN 220 can manage the UE 240. When receiving a sensing request of a sensing demander 260, the first network element 210 may trigger, based on the sensing request, a corresponding RAN to perform sensing, where the sensing may be performed by the RAN, or a UE served by the RAN may be triggered to perform sensing, to obtain sensing data, and provide the sensing data for the sensing demander 260.

It should be understood that FIG. 1 and FIG. 2 are merely example network architectures, and a network architecture applicable to embodiments of this application is not limited thereto. Any network architecture that can implement functions of the foregoing network elements is applicable to embodiments of this application.

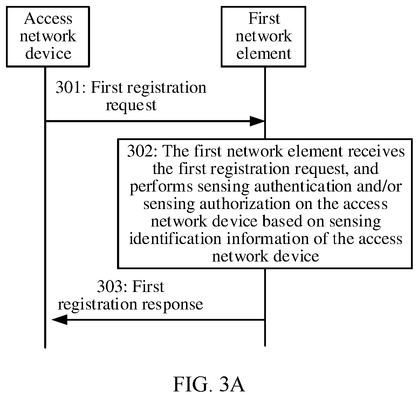

FIG. 3A is a schematic flowchart of a registration method 300 according to an embodiment of this application. The registration method 300 includes the following steps.

301: An access network device sends a first registration request to a first network element. The first registration request includes sensing identification information of the access network device.

The first registration request is used to request or trigger sensing authentication and/or sensing authorization on the access network device. The sensing authentication may be understood as verifying identity information of the access network device to determine whether the access network device is a valid user. In addition, whether the access network device has a capability of performing a sensing operation is further determined based on sensing authentication. The sensing authorization is to determine whether the access network device has permission to perform one or more operations (the one or more operations include the sensing operation), to determine an authorization result.

For example, a specific form of the first registration request may be a request message, a notification message, or the like. This is not particularly limited, provided that the specific form is a message used to initiate a registration request.

302: The first network element receives the first registration request from the access network device, and performs sensing authentication and/or sensing authorization on the access network device based on the sensing identification information of the access network device.

It may be understood that the first network element learns, based on sensing identification, that the access network device needs sensing authentication and/or sensing authorization. For example, the first network element may learn, based on the sensing identification, that when the first network element verifies the identity information of the access network device to determine whether the access network device has permission to perform one or more operations, the one or more operations need to include the sensing operation.

After performing sensing authentication and/or sensing authorization on the access network device, the first network element obtains a sensing authentication result and/or a sensing authorization result of the access network device.

303: The first network element sends a first registration response to the first registration request to the access network device. Correspondingly, the access network device receives the first registration response to the first registration request from the first network element. The first registration response includes the authentication result of the access network device and/or the authorization result of the access network device.

The first registration response reflects a processing result of the first registration request. In other words, the first network element sends the first registration response to the access network device based on the authentication result of the access network device and/or the authorization result of the access network device.

For example, the first registration response includes a registration result of the access network device, and the registration result may be represented by registration result indication information, sensing configuration information, and/or the like.

The registration result indication information may include registration success indication information (for example, "1" or "sensing supported") or registration failure indication information (for example, "0", "sensing unsupported", or a specific failure cause). When the first registration response includes the authentication result of the access network device or the authorization result of the access network device, the registration success indication information is equivalent to authentication success indication information or authorization success indication information, and the registration failure indication information is equivalent to authentication failure indication information or authorization failure indication information.

However, the sensing configuration information is delivered only when registration succeeds. Therefore, when the sensing configuration information is received, it indicates that registration succeeds; otherwise, it indicates that registration fails. The sensing configuration information includes at least one of the following information: the sensing identification information of the access network device, a sensing type of the access network device, and sensing frequency band indication information of the access network device. Other information that is similar to the sensing configuration information and that can be used to convey the registration result also falls within the protection scope of this application. This is not particularly limited.

In this embodiment, the access network device may request, by initiating the first registration request, to register with the first network element, to implement registration of the access network device, so that the first network element can manage the access network device, for example, manage a sensing service of the access network device.

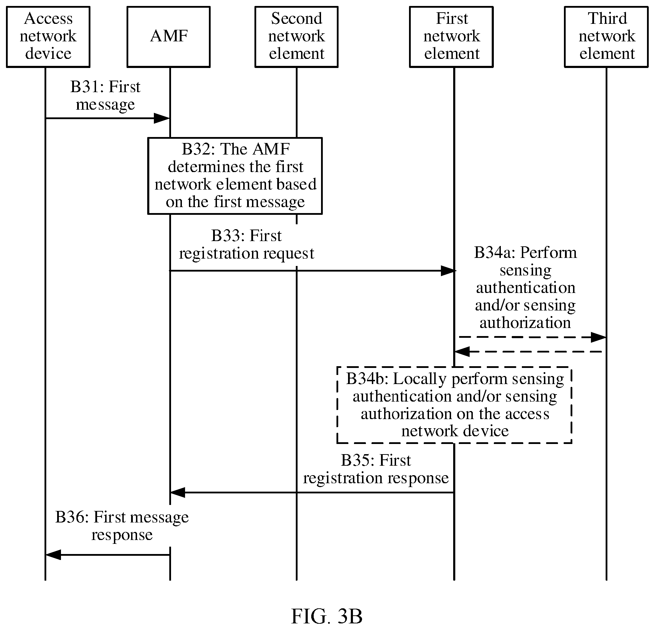

In an instance, the access network device sends the first registration request to the first network element via an AMF. The access network device receives the first registration response to the first registration request from the AMF. For a specific process, refer to the following specific descriptions of FIG. 3B.

FIG. 3B shows a possible implementation of the registration method 300. The registration method includes the following steps.

B31: An access network device sends a first message to an AMF.

The first message includes location area information of the access network device, identity (identity document, ID) information of the access network device, and a first registration request, and the first registration request includes sensing identification information of the access network device. In this embodiment, the first message is a control plane interface N2 message. In addition, with network evolution and development, the first message may alternatively be of another message type. This is not particularly limited.

For example, the location area information (location information) of the access network device is indicated by a cell global identifier (cell global identifier, CGI) and a tracking area identity (tracking area identity, TAI).

The ID information of the access network device is a string of digits and/or letters used to uniquely determine an access network device in a network, namely, unique code of the access network device. The ID information of the access network device may also be referred to as a global RAN node identifier (Global RAN Node ID). For example, the access network device is a gNB. In this case, the global RAN node identifier is a global gNB ID, and includes a public land mobile network (public land mobile network, PLMN) value of an operator and an ID of the gNB.

The sensing identification information includes any one of the following: ID information (the ID information may be understood as a sensing ID, and is used by the network to perform an operation like sensing authentication or authorization on the access network device based on the ID information), subscription permanent identifier (subscription permanent identifier, SUPI) information, subscription concealed identifier (subscription concealed identifier, SUCI) information, international mobile subscriber identity (international mobile subscriber identity, IMSI) information, permanent equipment identifier (permanent equipment identifier, PEI) information, international mobile equipment identity (international mobile equipment identity, IMEI) information, generic public subscription identifier (generic public subscription identifier, GPSI) information, and mobile subscriber international number (mobile subscriber international ISDN number, MSISDN) information.

An SUPI is a terminal identifier in a 5G communication system. The SUCI may be obtained by encrypting the SUPI. An IMSI is a terminal identifier in a 3G/4G communication system. For example, the sensing identification information of the access network device may alternatively be other identification information that can uniquely identify the access network device, provided that a first network element or a device (for example, a UDM) that performs authentication and/or authorization last can perform authentication and/or authorization on the access network device based on the sensing identification information. The SUPI may be an actually existing SUPI (in other words, a SIM card is built in the access network device) or a virtual SUPI.

Optionally, the first registration request further includes at least one of the following: location information of the access network device, sensing area information of the access network device, sensing quality of service information of the access network device, a sensing type additionally supported by the access network device, and a channel model parameter of the access network device. The location information of the access network device may be information about a specific deployment location (namely, a physical location) of the access network device, and the location information of the access network device may be absolute location information of the access network device or relative location information of the access network device. For example, the absolute location information may be longitude and latitude information of the deployment location of the access network device, and the relative location information may be location information of the access network device relative to a reference object. For example, the reference object is a building A, and the location information of the access network device is a top floor of the building A. In addition, the location information of the access network device may alternatively be location area information of the access network device.

The sensing area information of the access network device is information about an area that can be sensed by the access network device. For example, the sensing area is a range with the deployment location of the access network device as a center and with a radius of five meters or 10 meters.

For example, the sensing quality of service information of the access network device includes at least one of the following: a range resolution, a velocity resolution, and an angle precision. The sensing quality of service information of the access network device may be sensing quality of service information corresponding to a sensing capability of the access network device. In this case, the range resolution indicates a minimum range at which two targets are distinguished by the access network device as two targets or one target when the two targets are at a same azimuth angle but at different ranges from the access network device. The velocity resolution indicates a capability of the access network device to distinguish between targets in terms of a radial velocity. The angle precision indicates a minimum angle at which two targets are distinguished by the access network device as two targets or one target when the two targets are at a same range but different azimuth angles. For example, a terminal is an IAB node. The sensing quality of service information of the access network device may alternatively be sensing quality of service information corresponding to a sensing capability of the IAB node served by the access network device. In this case, the range resolution indicates a minimum range at which two targets are distinguished by the IAB node as two targets or one target when the two targets are located at a same azimuth angle but at different ranges from the IAB node. The velocity resolution is a capability of the IAB node to distinguish between targets in terms of a radial velocity. The angle precision indicates a minimum angle at which two targets are distinguished by the IAB node as two targets or one target when the two targets are at a same range but different azimuth angles.

The sensing type additionally supported by the access network device includes at least one of the following: a lidar, a camera, and an infrared sensor.

The channel model parameter of the access network device includes at least one of the following: an amplitude, a spatial three-dimensional coordinate system, an angle of arrival, an angle of incidence, an angle of emission, and a Doppler delay.

B32: The AMF determines the first network element based on the first message.

In this embodiment, the first network element may be an SF. Optionally, the AMF determines the first network element based on the first message. Alternatively, the AMF determines the first network element via a second network element. After determining the first network element based on the first message, the second network element notifies the AMF of information about the first network element. In this embodiment, the second network element may be an NRF.

For a method in which the AMF determines the first network element based on the first message, for example, the AMF determines the first network element based on the location area information of the access network device, and sends the first registration request to the first network element. In this embodiment, the AMF determines, based on a local mapping relationship, the SF that processes the first registration request from the access network device. The mapping relationship is a correspondence between a network element and a serving location area of the network element. In this case, the mapping relationship is a correspondence between a plurality of SFs and serving location areas corresponding to the plurality of SFs. The AMF performs matching in the mapping relationship based on the location area information of the access network device that is in the first message, and can determine one SF. A location area indicated by the location area information of the access network device is located in a serving location area of the SF.

For another example, when the first message carries an SUPI of the access network device, the AMF determines the SF based on the SUPI in the first message and a local mapping relationship. In this case, the mapping relationship is a correspondence between each SF and an SUPI (one or more SUPIs) of an access network device corresponding to each SF.

For another example, the AMF determines the SF based on local preset SF information, and the preset SF information indicates one or more preset SFs. When receiving the first registration request from the access network device, the AMF sends the first registration request to the preset SF. For example, when there are a plurality of preset SFs, the first registration request may be sequentially sent to the preset SFs in a preset sequence. For example, it is assumed that the preset SFs include an SF 1, an SF 2, and an SF 3, and the preset sequence is the SF 3, the SF 1, and the SF 2. In this case, when receiving the first registration request from the access network device for the first time, the AMF sends the first registration request to the SF 3 for processing; when receiving the first registration request from the access network device again, the AMF sends the first registration request to the SF 1 for processing; and so on.

A method in which the second network element determines the first network element based on the first message is similar to the method in which the AMF determines the first network element based on the first message. Details are not described again.

B33: The AMF sends the first registration request to the first network element.

The first network element may perform sensing authentication and/or sensing authorization on the access network device, or the first network element performs sensing authentication and/or sensing authorization on the access network device via a third network element.

In a possible implementation, in B34a, the first network element performs sensing authentication and/or sensing authorization on the access network device via the third network element. In this embodiment, the third network element may be a UDM.

In an instance, the UDM performs sensing authentication and/or sensing authorization on the access network device directly based on the sensing identification information of the access network device.

For example, if the sensing identification information of the access network device is an ID of the access network device, the UDM may perform sensing authentication and/or sensing authorization on the access network device based on the ID information of the access network device. The ID information of the access network device may be information carried in the first message, or the sensing identification information of the access network device that is carried in the first registration request is the ID information of the access network device. In comparison with a conventional technology, in this case, the UDM needs to be improved, so that the UDM supports performing sensing authentication and/or sensing authorization on the access network device based on the ID information of the access network device.

For another example, if the sensing identification information of the access network device is the SUPI of the access network device, the UDM performs sensing authentication and/or sensing authorization on the access network device based on the SUPI of the access network device. Details are as follows:
For example, the UDM stores subscription data of a plurality of subscribers, and the subscription data includes identification information of the subscribers and indication information indicating whether the subscribers have sensing capabilities. The SF sends an authentication request to the UDM. In response to the authentication request, the UDM obtains subscription data of the access network device through query based on the sensing identification information of the access network device. When the corresponding subscription data can be obtained based on the sensing identification information of the access network device, it indicates that the access network device is a subscriber and the access network device has a sensing capability. Sensing authentication on the access network device is implemented. The UDM returns an authentication response to the SF, to notify the SF of an authentication result of the access network device. For example, when the access network device is the subscriber and has the sensing capability, the authentication response carries the sensing identification information of the access network device. For another example, when the access network device is the subscriber and has the sensing capability, the authentication response carries authentication success indication information. When the access network device is not the subscriber and does not have the sensing capability, the authentication response carries authentication failure indication information.

For another example, subscription data stored in the UDM further includes authorization data of a subscriber, and the authorization data includes whether the subscriber is authorized to perform sensing (that is, sensing function authorization indication information, used to indicate whether sensing is authorized) and a specific sensing type that is subscribed to. The SF sends an authorization request to the UDM. In response to the authorization request, the UDM may obtain authorization data corresponding to the access network device through query based on the sensing identification information of the access network device, and may determine, based on the authorization data, whether to authorize the access network device to perform sensing and a specific sensing type that is authorized. Then, the UDM returns an authorization response to the SF, to notify the SF of an authorization result of the access network device. For example, the authorization response carries sensing function authorization indication information. Optionally, the authorization response may further include the sensing identification information of the access network device and/or a sensing type of the access network device.

For example, the authorization data of the access network device may further include sensing frequency band indication information of the access network device. The sensing frequency band indication information may indicate a specific frequency band, or indicate ID information corresponding to the specific frequency band. The ID information may include at least one of a digit, a letter, a special character, and the like. For example, for different network operators, same ID information may be used to represent different sensing frequency bands. Correspondingly, the authorization response in this case may further include the sensing frequency band indication information of the access network device.

For example, when the SF sends the authentication request and the authorization request to the UDM, the UDM first responds to the authentication request and then responds to the authorization request, and responds to the authorization request only when the authentication succeeds.

In another instance, the UDM or the first network element converts the sensing identification information of the access network device into an identifier that can be used by a core network to support authentication and/or authorization, and the UDM performs sensing authentication and/or sensing authorization on the access network device based on the identifier obtained through conversion.

The identifier that can be used by the core network to support authentication and/or authorization is, for example, an SUPI. For example, the UDM obtains the SUPI of the access network device based on a mapping relationship between the SUPI of the access network device and the sensing identification information (for example, an identifier like an ID that cannot support sensing authentication and/or sensing authorization) of the access network device, and then performs sensing authentication and/or sensing authorization on the access network device based on the SUPI of the access network device.

In a possible implementation, in B34b, the first network element locally performs sensing authentication and/or sensing authorization on the access network device.

Specifically, an operation of locally performing, by the first network element, sensing authentication and/or sensing authorization on the access network device is similar to an operation of the third network element. Details are not described again. After performing sensing authentication and/or sensing authorization on the access network device, the first network element may obtain a corresponding authentication response and/or a corresponding authorization response.

One of step B34a and step B34b may be selected and performed.

B35: The first network element sends a first registration response to the AMF.

The first network element obtains the first registration response based on the authentication response and/or the authorization response. The first registration response may include the sensing identification information of the access network device and/or the sensing type of the access network device.

Optionally, the first registration response may further include registration success indication information or registration failure indication information. When the registration failure indication information is received, it indicates that the access network device fails to perform registration, and the indication information may indicate a specific failure cause. Optionally, alternatively, the first registration response may carry the sensing identification information of the access network device and/or the sensing type of the access network device, to indicate that the registration succeeds.

Optionally, the first registration response may further include the sensing frequency band indication information of the access network device.

B36: The AMF provides the received first registration response for the access network device. To be specific, the AMF sends a first message response to the access network device, where the first message response carries the first registration response. For example, the first message response is an N2 message. In addition, with network evolution and development, the first message response may alternatively be of another message type. This is not particularly limited.

For example, the AMF may configure a sensing frequency band for the access network device. To be specific, the AMF generates the sensing frequency band indication information of the access network device, and includes the sensing frequency band indication information in the first registration response.

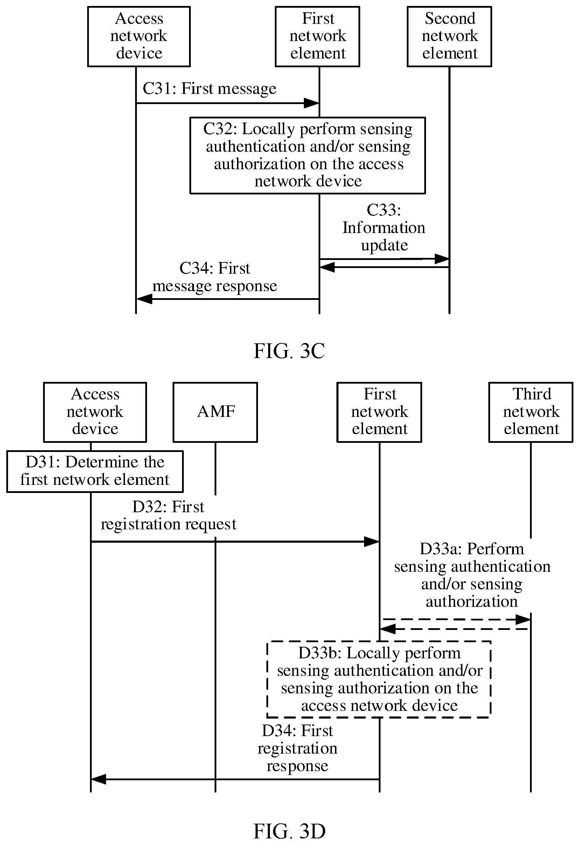

In an instance, the access network device sends the first registration request to the first network element via the first message. The first network element locally performs sensing authentication and/or sensing authorization on the access network device based on the first registration request. The access network device receives the first registration response to the first registration request from the first network element. For a specific process, refer to the following specific descriptions of FIG. 3C.

FIG. 3C shows a possible implementation of the registration method 300. The registration method includes the following steps.

C31: An access network device sends a first message to a first network element.

In this embodiment, for specific descriptions of the first message, refer to descriptions of the first message in FIG. 3B. Details are not described again.

In this embodiment, the first network element may be an AMF.

C32: The first network element locally performs sensing authentication and/or sensing authorization on the access network device.

Specifically, for specific descriptions in which the first network element performs sensing authentication and/or sensing authorization on the access network device, refer to related descriptions of FIG. 3B. Details are not described again. The specific descriptions are the same as those of a method in which the third network element performs sensing authentication and/or sensing authorization on the access network device. After performing sensing authentication and/or sensing authorization on the access network device, the first network element may obtain a corresponding authentication response and/or a corresponding authorization response.

C33: The first network element indicates a second network element to update sensing capability information of the first network element.

It may be understood that, after the access network device registers with the first network element, the first network element updates the sensing capability information of the first network element to the second network element, in other words, updates sensing capability information of the access network device registered with the first network element.

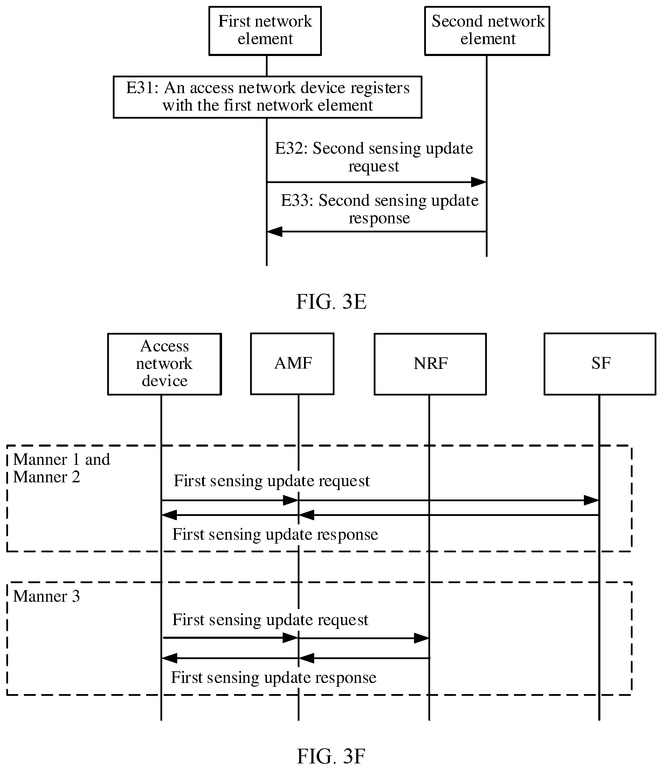

For details, refer to descriptions of FIG. 3E. Details are not described.

C34: The first network element sends a first message response to the access network device, where the first message response carries a first registration response. For example, the first message response is an N2 message, and the N2 message is used to provide the authentication response and/or the authorization response in step 2 for the access network device.

In an instance, the access network device determines the first network element, the access network device sends the first registration request to the first network element, and the access network device receives the first registration response to the first registration request from the first network element. For a specific process, refer to the following specific descriptions of FIG. 3D.

FIG. 3D shows a possible implementation of the registration method 300. The registration method includes the following steps.

D31: An access network device determines a first network element.

In this embodiment, the first network element may be an SF.

For example, the access network device determines the first network element based on local network element configuration information. Specifically, the local network element configuration information of the access network device indicates an SF to which the access network device should send a first registration request. There may be one or more SFs indicated by the network element configuration information. For example, the network element configuration information may be network element identification information of the first network element or address information (for example, an IP address) of the first network element.

For another example, the access network device obtains a mapping relationship, where the mapping relationship is a correspondence between a network element and a serving location area of the network element. The access network device determines the first network element based on the mapping relationship and location area information of the access network device, where a location area indicated by the location area information of the access network device is located in a serving location area of the first network element.

Further, for example, the mapping relationship is obtained by the access network device from an AMF network element. The following steps are specifically included.

The access network device sends an access network device setting request to the AMF network element. The access network device receives a setting response from the AMF network element, where the setting response includes the mapping relationship.

The access network device setting request is used to request the AMF to set the access network device. The AMF sends the setting response to the access network device in response to the access network device setting request. The setting response includes various setting information of the access network device. In addition, the setting response further includes the mapping relationship. It can be learned that, in this embodiment, an instruction of an existing access network device setting procedure is reused to obtain the mapping relationship, so as to help reduce communication overheads of the access network device.

D32: The access network device sends the first registration request to the first network element.

For related descriptions of the first registration request, refer to related descriptions of FIG. 3B. A difference lies in that information optionally carried in the first registration request may further include ID information of the access network device.

The first network element may perform authentication and/or authorization on the access network device, or the first network element performs authentication and/or authorization on the access network device via a third network element.

D33a: The first network element performs sensing authentication and/or sensing authorization on the access network device via the third network element. In this embodiment, the third network element may be a UDM. For specific descriptions, refer to related descriptions of FIG. 3B.

D33b: The first network element locally performs sensing authentication and/or sensing authorization on the access network device. For specific descriptions, refer to related descriptions of FIG. 3B.

One of step D33a and step D33b may be selected and performed.

D34: The first network element sends a first registration response to the access network device. For example, the first registration response may include at least one of the following: sensing identification information of the access network device, a sensing type of the access network device, and the ID information of the access network device.

In an instance, after the access network device registers with the first network element, the first network element updates sensing capability information of the first network element to a second network element, in other words, updates sensing capability information of the access network device registered with the first network element. In this embodiment, the first network element may be an SF or an AMF, and the second network element is an NRF. For specific descriptions, refer to related descriptions of FIG. 3E.

FIG. 3E is a schematic flowchart of an information update according to an embodiment of this application. The following steps are specifically included.

E31: An access network device registers with a first network element.

E32: The first network element sends a second sensing update request to a second network element, where the second sensing update request is used to request the second network element to update sensing capability information of the first network element.

For example, the second sensing update request includes ID information of the first network element and sensing capability information of the access network device. For example, the sensing capability information includes sensing area information of the access network device. Further, for example, the sensing capability information may further include a sensing type additionally supported by the access network device and/or sensing quality of service information of the access network device.

E33: The first network element receives a second sensing update response sent by the second network element. For example, information carried in the second sensing update response is the same as information carried in the second sensing update request.

In an instance, when the sensing capability information of the access network device changes, the access network device may update the sensing capability information of the access network device to the first network element or the second network element. For specific details, refer to related descriptions of FIG. 3F. In this embodiment, the first network element may be an AMF or an SF, and the second network element may be an NRF.

FIG. 3F is a schematic flowchart of another information update according to an embodiment of this application. The following steps are specifically included.

Manner 1: When a first network element is an AMF, an access network device sends a first sensing update request to the AMF, where the first sensing update request is used to request the AMF to update sensing capability information of the access network device. After receiving the first sensing update request and storing information carried in the first sensing update request, the AMF sends a first sensing update response to the access network device, so that the access network device learns that update is completed.

Specifically, the first sensing update request includes the sensing capability information of the access network device, and the sensing capability information of the access network device includes sensing area information of the access network device. In addition, the sensing capability information further includes at least one of the following: sensing identification information of the access network device, sensing quality of service information of the access network device, a sensing type additionally supported by the access network device, and a channel model parameter of the access network device.

Optionally, information included in the first sensing update response may be the same as the information included in the first sensing update request.

Manner 2: When a first network element is an SF, an access network device sends a first sensing update request to the SF via an AMF. After receiving the first sensing update request and storing information carried in the first sensing update request, the SF sends a first sensing update response to the access network device via the AMF.

Manner 3: An access network device sends a first sensing update request to an NRF. After receiving the first sensing update request and storing information carried in the first sensing update request, the NRF sends a first sensing update response to the access network device. For example, the access network device sends the first sensing update request to the NRF via an AMF, and the NRF sends the first sensing update response to the access network device via the AMF.

In Manner 2 and Manner 3, for descriptions of the first sensing update request and the first sensing update response, refer to Manner 1. Details are not described again.

The following several embodiments are specific descriptions of a process in which a terminal having a sensing capability registers with an access network device. Mutual combination and inspiration may be performed on technical features in different embodiments.

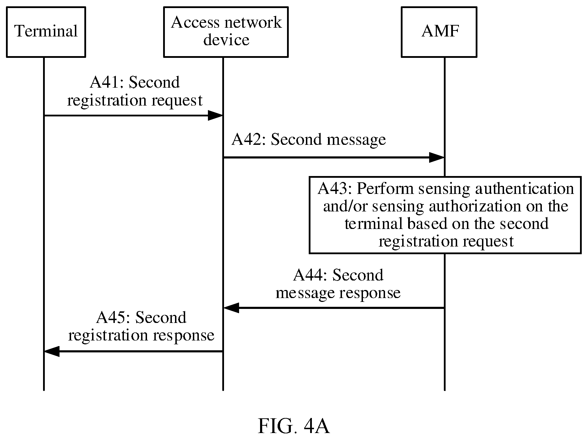

FIG. 4A is a schematic flowchart of another registration method according to an embodiment of this application. The following steps are included.

A41: A terminal sends a second registration request to an access network device, where the second registration request includes a sensing indication, and the sensing indication indicates that the terminal is configured to perform sensing.

Specifically, in this embodiment, the terminal is a terminal having a sensing capability. The terminal initiates the second registration request to request to register with the access network device. Similarly, a specific form of the second registration request may be a request message, or may be a notification message. This is not particularly limited. A specific form of the sensing indication may be sensing indication information or a sensing resource request message, and the sensing resource request message may indirectly indicate that the terminal may be configured to perform sensing.

A42: The access network device sends a second message to an AMF network element, where the second message includes the second registration request.

A43: The AMF network element performs sensing authentication and/or sensing authorization on the terminal based on the second registration request. Specifically, the AMF network element may perform sensing authentication and/or sensing authorization on the terminal, or the AMF network element performs sensing authentication and/or sensing authorization on the terminal via a third network element. For a specific sensing authentication and/or sensing authorization process of the AMF network element, refer to step B34a and step B34b. Details are not described herein again.

A44: The access network device receives a second message response from the AMF network element, where the second message response includes an authentication result of the terminal and/or an authorization result of the terminal.

Correspondingly, the AMF network element sends the second message response to the access network device.

Specifically, after completing sensing authentication and/or sensing authorization on the terminal, the AMF may obtain the authentication result of the terminal and/or the authorization result of the terminal, and provide the authentication result of the terminal and/or the authorization result of the terminal for the access network device via the second message response, so that the access network device learns of a registration result of the terminal.

In this embodiment, the terminal may request, by initiating the second registration request to the access network device, to register with the access network device, to implement registration of the terminal, so that the access network device can manage the terminal, for example, manage a sensing service of the terminal.

Further, refer to FIG. 4A. In this embodiment, the registration method further includes:
A45: The access network device sends a second registration response to the second registration request to the terminal, where the second registration response is obtained based on the second message response.

Specifically, after determining the registration result of the terminal based on the second message response, the access network device may send the second registration response to the terminal, so that the terminal can learn of the registration result of the terminal based on the second registration response.

For example, the second registration response includes the authentication result of the terminal and/or the authorization result of the terminal. In this case, the authentication result and/or the authorization result may be understood as the registration result of the terminal, and the registration result may be represented by registration result indication information, node configuration information of the terminal, configuration information associated with the sensing service of the terminal, namely, configuration information of the terminal, and/or the like. The node configuration information is configuration information of the terminal other than the sensing service.

The registration result indication information may include registration accept indication information (for example, "1" or "registration accept") or registration failure indication information (for example, "0", "registration failure", or a specific failure cause). When the second registration response includes the authentication result of the terminal or the authorization result of the terminal, the registration success indication information is equivalent to authentication success indication information or authorization success indication information, and the registration failure indication information is equivalent to authentication failure indication information or authorization failure indication information.

However, the node configuration information and/or the configuration information of the terminal are/is delivered only when registration succeeds. Therefore, when the node configuration information and/or the configuration information of the terminal are/is received, it indicates that registration succeeds; otherwise, it indicates that registration fails. Other information that is similar to the node configuration information and/or the configuration information of the terminal and that can be used to convey the registration result also falls within the protection scope of this application. This is not particularly limited.

In an instance, the second registration request further includes a relay indication, and the relay indication indicates that the terminal is a relay node. A specific form of the relay indication may be relay indication information or a terminal request message, and the terminal request message may indirectly indicate that the terminal is the relay node. For example, when the terminal is an IAB node, the second registration request further includes an IAB node indication, and the IAB node indication indicates that a node that sends the second registration request is the IAB node. For another example, when the terminal is an RN, the second registration request further includes an RN subframe configuration request, and the request is used to request the access network device to perform air interface configuration on the RN, in other words, may indirectly indicate that a node that sends the second registration request is the RN.

In another instance, the second registration request may further include at least one of the following information: location information of the terminal, sensing area information of the terminal, sensing quality of service information of the terminal, a sensing type additionally supported by the terminal, and a channel model parameter of the terminal.

The channel model parameter of the terminal includes at least one of the following: an amplitude, a spatial three-dimensional coordinate system, an angle of arrival, an angle of incidence, an angle of emission, and a Doppler delay.

For example, the second registration request further carries ID information of the terminal, so that the AMF can implement authentication and/or authorization based on the ID information of the terminal. For example, the ID of the terminal may be any one of the following: SUPI information, SUCI information, an IMSI, PEI information, IMEI information, GPSI information, and MSISDN information.

The location information of the terminal is deployment location information of the terminal, and may be absolute location information or relative location information. The sensing area information of the terminal is information about an area that can be sensed by the terminal.

For example, the sensing quality of service information of the terminal includes at least one of the following: a range resolution, a velocity resolution, and an angle precision. The sensing type additionally supported by the terminal includes at least one of the following: a lidar, a camera, and an infrared sensor.

In an instance, the registration method further includes:
The access network device sends at least one of the following information to the terminal: the configuration information of the terminal, sensing configuration information of the terminal, sensing authorization indication information, and sensing identification information of the terminal.

For example, the configuration information of the terminal includes the sensing identification information of the terminal. The sensing identification information is ID information allocated to the terminal, and may be allocated by the access network device. Alternatively, after a core network (for example, the AMF or a UDM) allocates an ID to the terminal, the core network allocates the allocated ID to the access network device.

For another example, the configuration information of the terminal further includes at least one of the following: a sensing bandwidth, sensing frequency band indication information, sensing quality of service indication information, a sensing detection distance, sensing power, a sensing data reporting format, reporting indication information for sensing data quality information, and a sensing detection sensitivity level. The sensing frequency band indication information indicates a frequency band used by the terminal for sensing, and may directly indicate a specific frequency band, or indicate ID information corresponding to the specific frequency band. The ID information may include at least one of a digit, a letter, a special character, and the like. For example, for different network operators, same ID information may be used to represent different sensing frequency bands. The sensing quality of service indication information indicates sensing quality of service of the terminal, namely, sensing quality of service of a specified terminal. The reporting indication information for sensing data quality information indicates whether to report sensing data quality information of the terminal, and the sensing detection sensitivity level includes, for example, three levels: high, medium, and low.

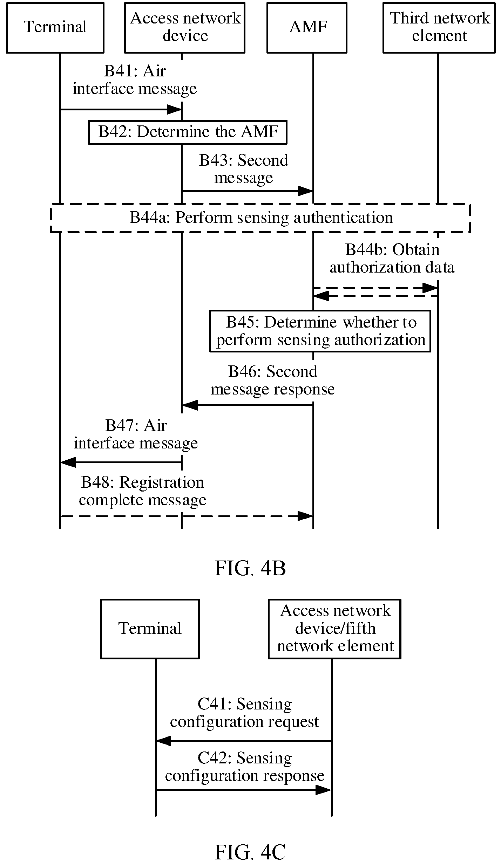

FIG. 4B is a schematic flowchart of another registration method according to an embodiment of this application. FIG. 4B shows a specific registration process of a terminal. In this embodiment, the registration method includes the following steps.

B41: The terminal sends an air interface message to an access network device.

The air interface message carries a second registration request, and the second registration request includes a sensing node indication.

For example, when the terminal is an IAB node, the air interface message further carries an IAB node indication. Further, the second registration request may further include ID information of the terminal.

B42: The access network device determines an AMF.

The access network device may select one AMF from a plurality of AMFs as the AMF that processes the registration request of the terminal, and send the registration request of the terminal to the AMF indicated by local configuration information.

For example, the access network device may select, from the plurality of AMFs, an AMF with lowest system load as the AMF that processes the registration request of the terminal. Alternatively, the access network device performs AMF selection based on link load between the plurality of AMFs and the access network device, for example, selects an AMF with lowest link load as the AMF that processes the registration request of the terminal. Alternatively, the access network device may select, from the plurality of AMFs, an AMF that supports authentication and/or authorization on the terminal as the AMF that processes the registration request of the terminal.

B43: The access network device sends a second message to an AMF network element, where the second message includes the second registration request.

In this embodiment, the second message may be an N2 message. In addition, with network evolution and development, the second message may alternatively be of another message type. This is not particularly limited.

In a possible implementation, in B44a, sensing authentication is performed on the terminal. Specifically, an AUSF and a third network element perform sensing authentication on the terminal. In this embodiment, the third network element may be a UDM. The access network device and the AMF participate in a sensing authentication process as communication transits. In addition, the AUSF and the third network element further perform encryption processing on communication signaling and data between the terminal and a network side.

In another possible implementation, in B44b, the AMF obtains authorization data from a third network element.

For example, the authorization data includes sensing permission indication information. The sensing permission indication information indicates that the terminal is allowed to perform sensing. When the terminal is the IAB node, the authorization data may further include IAB operation permission indication information, and the IAB operation permission indication information indicates a node that sends the second registration request to serve as the IAB node to perform a related operation. Optionally, the authorization data may further include a sensing type (for example, a camera or infrared) additionally supported by the terminal and/or sensing frequency band indication information of the terminal.

One of step B44a and step B44b may be selected and performed. When step B44b is performed, step B45 needs to be performed. Alternatively, both step B44a and step B44b may be performed.

B45: After obtaining the authorization data in step B44b, the AMF determines whether to authorize sensing of the terminal. For example, the AMF may perform matching directly based on the authorization data and a sensing capability of the terminal that is carried in the second registration request, to determine whether to authorize the sensing capability of the terminal. When the authorization data includes the sensing permission indication information, the terminal may be authorized to perform sensing. For example, when the terminal is the IAB node, and the authorization data includes the sensing permission indication information and the IAB operation permission indication information, the terminal may be authorized to perform sensing. For another example, the AMF may determine, based on local authorization configuration information of the terminal, whether to authorize the terminal to perform sensing. To be specific, the AMF determines, based on the local authorization configuration information, the authorization data, and the sensing capability supported by the terminal, whether to authorize the sensing capability of the terminal. For example, when the authorization data includes the sensing permission indication information, but authorizing the sensing capability of the terminal is not configured in the local authorization configuration information, it may be determined not to authorize the terminal to perform sensing. For another example, when the authorization data does not include the sensing permission indication information, but authorizing the sensing capability of the terminal is configured in the local authorization configuration information, it may be determined to authorize the terminal to perform sensing.

B46: The AMF sends a second message response to the access network device. When the terminal performs registration successfully, the second message response includes registration accept indication information. In addition, the second message response may further include sensing authorization indication information. The registration accept indication information indicates that the terminal performs registration successfully, and the sensing authorization indication information indicates that the terminal obtains sensing authorization. When the terminal fails to perform registration, the second message response includes registration failure indication information.

For example, when the terminal is the IAB node, the second message response may further include IAB authorization indication information, and the IAB authorization indication information indicates that the IAB node is authorized. When the authorization data in step B44b includes the sensing frequency band indication information of the terminal, the AMF may redetermine the sensing frequency band indication information of the terminal, and then include the sensing frequency band indication information in the second message response. When the authorization data in step B44b does not include the sensing frequency band indication information of the terminal, the AMF may determine the sensing frequency band indication information of the terminal, and then include the sensing frequency band indication information in the second message response.

B47: The access network device sends an air interface message to the terminal.

Specifically, because the second registration request is sent by the terminal via the air interface message, correspondingly, a second registration response is sent to the terminal via the air interface message. The second registration response includes the registration accept indication information, and when the registration accept indication information is received, it indicates that the terminal performs registration successfully. For example, the second registration response may alternatively include registration failure indication information. When the registration failure indication information is received, it indicates that the terminal fails to perform registration, and the indication information may indicate a specific failure cause.

In addition, for example, when the terminal performs registration successfully, the air interface message may further carry at least one of the following information: the sensing authorization indication information, sensing identification information of the terminal, node configuration information of the terminal, and configuration information of the terminal (configuration information associated with a sensing service). The access network device may allocate sensing identification information to terminals, to manage the terminals in a unified manner. The node configuration information is configuration information of the terminal other than the sensing service.

B48: Optionally, the terminal sends a registration complete message to the AMF, to notify the AMF that the terminal has completed registration.

In an instance, FIG. 4C is a schematic flowchart of configuration of a terminal according to an embodiment of this application. After the terminal registers with an access network device, or after the access network device receives a sensing request from a sensing demander, the following steps are further included.

C41: The access network device or a fifth network element sends a sensing configuration request to the terminal, where the sensing configuration request includes configuration information associated with a sensing service of the terminal, namely, configuration information of the terminal.

Correspondingly, the terminal receives the sensing configuration request sent by the access network device or the fifth network element, and configures the sensing service of the terminal based on the configuration information in the sensing configuration request.

In this embodiment, the fifth network element may be an OAM. For example, the OAM sends the sensing configuration request to the terminal based on an IP address of the terminal.

C42: The access network device or the fifth network element receives a sensing configuration response of the terminal.

For example, the sensing configuration response includes at least one of the following: sensing identification information of the terminal and sensing area information of the terminal.

Further, for example, the sensing configuration response may further include at least one of the following: sensing quality of service information of the terminal, a sensing type additionally supported by the terminal, location information of the terminal, and a channel model parameter of the terminal.

In an instance, after registering with the access network device, or after receiving a sensing request of the access network device, the terminal configures the sensing service of the terminal based on local configuration information, where the configuration information is the foregoing configuration information of the terminal.

In an instance, after configuring the sensing service of the terminal, the terminal starts to perform sensing. For another example, no spectrum resource (namely, an operating spectrum of the sensing service of the terminal) is allocated when the terminal performs configuration. After the configuration is completed, the terminal starts sensing work only after receiving a sensing trigger request (namely, a request for triggering, after the access network device receives the sensing request from the sensing demander, the terminal to perform sensing). This saves energy and reduces emission, and improves a reuse rate of spectrum resources.

In an instance, in addition to sending, when a sensing capability of the access network device changes, a first sensing update request to a first network element or a second network element to update sensing capability information (refer to FIG. 3F), the access network device may determine, based on a second message response, whether to send the first sensing update request. Specifically, when the access network device determines, based on an authentication result and/or an authorization result in the second message response, that the terminal performs registration successfully, in other words, after the terminal registers with the access network device, the sensing capability information of the access network device changes, and the access network device may send the first sensing update request to the first network element or the second network element, to update the sensing capability information of the access network device. For a specific update process, refer to related descriptions of FIG. 3F. Details are not described herein again.

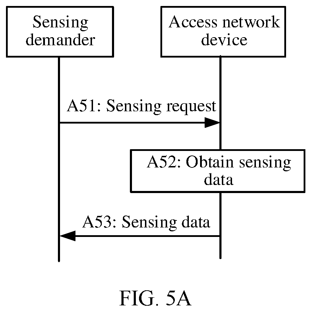

In embodiments of this application, when a sensing demander has a sensing service requirement, sensing data may be obtained by initiating a sensing request. Specifically, FIG. 5A is a schematic flowchart of a sensing service according to an embodiment of this application. The following steps are included.

A51: An access network device receives a sensing request from a sensing demander.

The sensing demander includes at least one of the following: a first network element, an application service function AF network element, or a terminal device. The terminal device herein is a terminal device having a sensing requirement, and may be a terminal that requests to register with the access network device in embodiments of this application, or may be another terminal.

For example, when the sensing demander is an AF, the AF may send the sensing request to the first network element via a fourth network element, and then send the sensing request to the access network device via the first network element. In this case, the sensing request is obtained by the first network element from the fourth network element. In this embodiment, the fourth network element may be an NEF.

Further, for example, the sensing request includes sensing area information, and the sensing request is used to request sensing data of an area indicated by the sensing area information. The sensing area information is information about an area requested to be sensed. The sensing area information is interchangeable with sensing area, sensitive area, request area, sensing area-related information, request area information, sensitive area information, and the like. For example, the sensing area information may indicate an absolute location or a relative location, or the sensing area information indicates a current location (which may be understood as an alternative name rather than specific location information) of the sensing demander. In this embodiment, the sensing demander may be a UE.

For example, the sensing request further includes at least one of the following: reporting frequency of the sensing data, duration of reporting the sensing data, a format of the sensing data, reporting indication information for sensing data quality information, a reporting filter condition of the sensing data, minimum duration for which a sensed target stays in a sensing area, and an additional sensing type.

The format of the sensing data indicates a specific type of sensing data needed by the sensing demander. For example, the format of the sensing data may be sensing result data, original sensing data, or intermediate data obtained by performing post-processing on the original sensing data. Specifically, for example, the sensing result data may be a specific type of the sensed target, for example, a person, an animal, or a means of transportation like a vehicle. An example in which the sensing type is a radar is used. The original sensing data is original radar sensing data, and the intermediate data is, for example, a cluster (cluster).

The reporting indication information for sensing data quality information indicates whether to report sensing data quality information corresponding to the sensing data. The reporting indication information for sensing data quality information is interchangeable with sensing data quality reporting indication, sensing data quality reporting-related indication information, sensing data quality reporting-related indication, sensing quality reporting indication, and the like.

The sensing demander may set the reporting filter condition of the sensing data based on an actual requirement of the sensing demander. In this way, only sensing data that meets the reporting filter condition is provided for the sensing demander.

When the sensing request carries the additional sensing type, it indicates that the sensing demander requests to obtain data of the additional sensing type.

A52: The access network device obtains the sensing data based on the sensing request.

A53: The access network device provides the sensing data for the sensing demander.

In this embodiment, the access network device may obtain the sensing data in response to the sensing request from the sensing demander, and provide the sensing data for the sensing demander, to meet the sensing requirement of the sensing demander.

The following uses two specific instances to describe in detail a specific process of a sensing service.

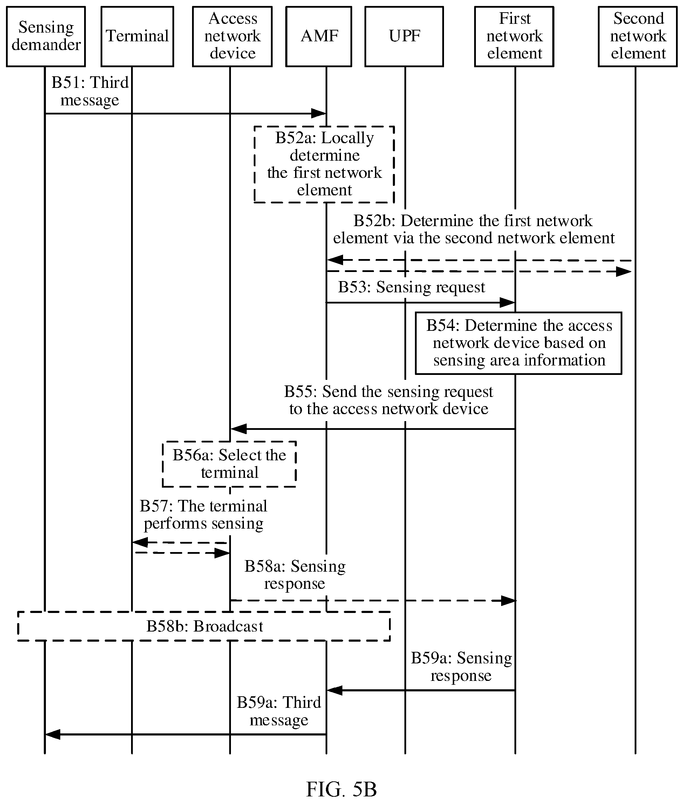

FIG. 5B shows an example procedure in which a UE having a sensing requirement requests a sensing service. The following steps are included.

B51: A sensing demander sends a third message to an AMF.

In this embodiment, the sensing demander may be a UE having a sensing requirement, and the third message includes a sensing request. The sensing request includes sensing area information. Further, for example, the sensing request may further include other information such as reporting frequency of sensing data. In this embodiment, the third message may be a signaling plane interface N1 message. In addition, with network evolution and development, the third message may alternatively be of another message type. This is not particularly limited.

In this embodiment, a first network element may be an SF.

For example, the sensing demander may first send the third message to a terminal, then the terminal sends the third message to an access network device, and finally the access network device sends the third message to the AMF. Each time the access network device sends information to the AMF, the information carries cell information and a TAI of the access network device.

For another example, the sensing demander may first send the third message to an access network device, and then the access network device sends the third message to the AMF.

B52a: The AMF locally determines the first network element.

Specifically, the AMF performs matching in a locally stored correspondence between the first network element and a sensing area of the first network element based on the sensing area information in the sensing request, to determine the first network element that processes the sensing request.

For example, when the sensing area information indicates an absolute location or a relative location, matching may be performed in the correspondence directly based on the sensing area information, to determine the first network element.

For another example, when the sensing area information indicates a current location of the sensing demander, the AMF or the SF may obtain an absolute location or a relative location of the sensing demander from an LMF, and then the AMF performs matching in the correspondence based on the absolute location or the relative location of the sensing demander, to determine the first network element. When the SF requests to obtain location information of the sensing demander from the LMF, the AMF may determine, based on the TAI of the access network device in step B51, which SF obtains the location information of the sensing demander from which LMF.

B52b: The AMF determines the first network element via a second network element.

In this embodiment, the second network element may be an NRF. The sensing request includes the sensing area information. In this case, the NRF may perform matching in a correspondence between the first network element and a sensing area of the first network element based on the sensing area information, to determine the first network element that processes the sensing request. The NRF provides the first network element obtained through matching for the AMF.

Specifically, the AMF sends a network element determining request to the NRF, to request the NRF to determine the first network element. After determining the first network element, the NRF sends a network element determining response to the AMF, to provide information about the first network element for the AMF. For example, when the sensing area information indicates a current location of the sensing demander, after the AMF or the SF first requests to obtain an absolute location or a relative location of the sensing demander from an LMF, the AMF may replace the sensing area information in the sensing request with the obtained location information, and then send the sensing request to the NRF.

One of step B52a and step B52b may be selected and performed.

B53: The AMF sends the sensing request to the first network element.

B54: The first network element determines the access network device based on the sensing area information.

Specifically, the first network element may determine ID information of the access network device based on the sensing area information, and may send the sensing request to the access network device based on the ID information of the access network device.

B55: The first network element sends a sensing request to the access network device.

Specifically, the sensing request in step B55 may be the same as or different from the sensing request from the sensing demander. In other words, the first network element may adjust the sensing request based on an actual case. For example, when a sensing area requested by the sensing demander includes a sensing-forbidden area, the SF may use a sensing area from which the sensing-forbidden area is removed as a new sensing area, and then add the new sensing area to the sensing request and send the sensing request to the access network device.

For example, the first network element may add a user plane address (or the user plane address and a communication port number) of the first network element to the sensing request, and then send the sensing request to the access network device. In this way, the access network device may select, based on an actual case, a manner of returning the sensing data to the first network element. For example, when a data volume of the sensing data is large, the sensing data may be sent to the first network element based on the user plane address of the first network element via a user plane. This reduces data sending time, and helps improve response efficiency of the access network device on the sensing service.

For example, the first network element may send the sensing request to the access network device via a control plane. Specifically, the first network element may first send the sensing request to the AMF, and then the AMF sends the sensing request to the access network device.

For another example, the first network element may alternatively send the sensing request to the access network device via the user plane. Specifically, the first network element may first send the sensing request to a UPF, and then the UPF sends the sensing request to the access network device.

For another example, in step B51, when the access network device communicates with the AMF, the access network device reports an IP address of the access network device to a network side. Optionally, the access network device may report a (fixed or dynamic) port number of the access network device. In this way, the first network element may directly send the sensing request to the access network device based on the IP address of the access network device.

B56a: Optionally, the access network device selects a terminal based on the sensing area information. Optionally, when a sensing capability of the access network device cannot meet the sensing request, the access network device performs step B56a. For example, when a sensing area of the access network device is inconsistent with the requested sensing area, the access network device may indicate an appropriate terminal to perform sensing, to obtain a sensing response.

B56b: The access network device performs sensing to obtain the sensing response. The sensing response carries sensing data that meets a requirement. For example, the sensing response may further include at least one of the following: a format of the sensing data, sensing data quality information, data of an additional sensing type, and a channel model parameter of the access network device.

One of step B56a and step B56b may be selected and performed. Certainly, the access network device may alternatively perform both step B56a and step B56b based on an actual case, so that the access network device and the terminal perform sensing to obtain the sensing data.

B57: Optionally, step B57 corresponds to step B56a, and after step B56a, the access network device indicates the terminal to perform sensing. The access network device sends the sensing request to the corresponding terminal, so that the terminal performs sensing. After obtaining the sensing data, the terminal sends the sensing response to the access network device. The sensing response carries sensing data that meets a requirement. For example, the sensing response may further include at least one of the following: a format of the sensing data, sensing data quality information, data of an additional sensing type, and a channel model parameter of the terminal.

The sensing data quality information includes at least one of the following: a range standard deviation, a velocity standard deviation, a false alarm probability, a detected cluster or object validity state parameter, and a Doppler state parameter.

The range standard deviation is interchangeable with range-related standard deviation, range deviation, range error, and the like. A range may be a distance between a detected object or cluster and the access network device, may be a horizontal range and/or a vertical range that correspond/corresponds to the range, or may be coordinate information of the detected object or cluster. The range standard deviation may be a specific value, or an interval of different range standard deviation values indicated by number IDs, letters, or the like.

The velocity standard deviation is interchangeable with velocity-related standard deviation, velocity deviation, velocity error, and the like. A velocity may be an absolute value of a radial velocity and/or a vertical velocity that are/is of an object, or may be a relative velocity. The velocity standard deviation may be a specific value, or an interval of different velocity standard deviation values indicated by number IDs, letters, or the like.

The false alarm probability is interchangeable with false alarm-related probability or the like. The false alarm probability is, for example, a probability that the detected cluster or object is a false target caused due to multipath.

The detected cluster or object validity state parameter is interchangeable with detected cluster or object validity status-related parameter, validity state, or the like. The detected cluster or object validity state parameter includes an invalid state and a valid state, and may further include a cause for determining as the invalid state and a cause for determining as the valid state.

The Doppler state parameter is interchangeable with Doppler state-related parameter and the like. The Doppler state parameter includes a validity state of a radial velocity of the detected cluster or object and a corresponding cause.

For example, if the format of the returned sensing data is an object, the following information may be further included: object acceleration information (including acceleration information in a horizontal and/or vertical direction), object type information, and object size information (including at least one of a length, a width, and a height). The object acceleration information is interchangeable with object acceleration-related information, object acceleration, and the like. The object type information is interchangeable with object type, object category, object category information, and the like. The object size information is interchangeable with size of the object, size information of the object, object size, and the like.

For example, the sensing request sent by the access network device to the terminal in B57 may also include the user plane address (or the user plane address and the communication port number) of the first network element.

B58a: The access network device sends the sensing response to the first network element.

Same as step B55, the sensing response may be sent to the first network element via the control plane or the user plane.

B58b: The access network device broadcasts the sensing data (or broadcasts the sensing data by using the terminal), where the broadcast data may be the same as or different from the data in the sensing response. If the sensing demander may receive the broadcast sensing data, step B59a or step B59b may be skipped.

One of step B58a and step B58b may be selected and performed.

B59a: In correspondence to step B58a, the first network element sends the sensing response to the sensing demander. Specifically, the first network element sends the sensing response to the sensing demander via the AMF. After receiving the sensing response, the AMF sends the sensing response to the sensing demander via a third message. In this embodiment, the third message may be an N1 message. In addition, with network evolution and development, the third message may alternatively be of another message type. This is not particularly limited.

B59b: In correspondence to step B58a, the first network element may send the sensing response to the sensing demander via the user plane. For example, in step B51, the sensing demander sends an IP address of the sensing demander (optionally, a communication port number of the sensing demander may be further included) to the network side via the third message or the sensing request. In this way, the first network element may learn of the IP address of the sensing demander, and may directly send the sensing response to the sensing demander via the user plane.

One of step B59a and step B59b may be selected and performed.

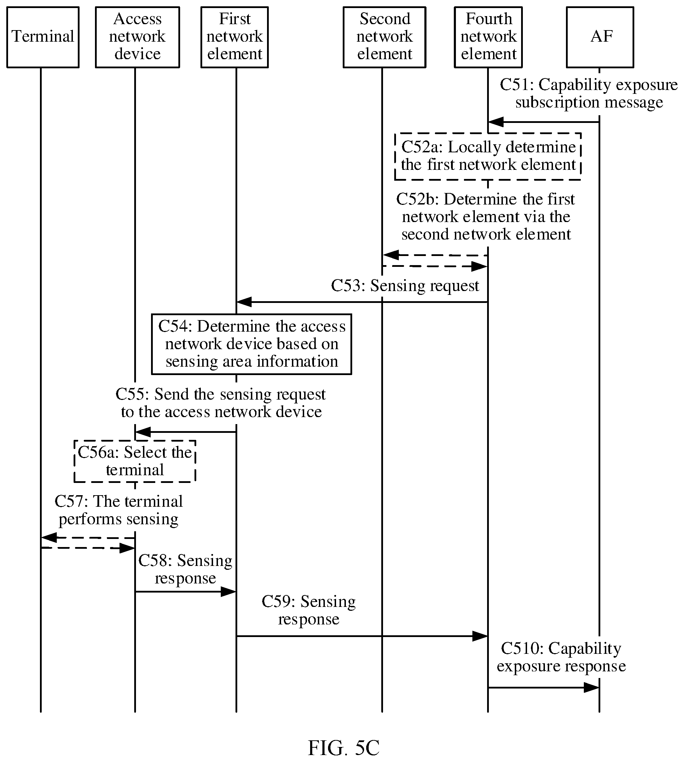

FIG. 5C shows an example procedure in which an AF requests a sensing service. The following steps are included.

C51: The AF sends a capability exposure subscription message to a fourth network element.

The capability exposure subscription message includes a sensing request. In this embodiment, the fourth network element may be an NEF.

C52a: The fourth network element locally determines a first network element.

In this embodiment, the first network element may be an AMF. The NEF performs matching in a locally stored correspondence between the first network element and a sensing area of the first network element based on sensing area information in the sensing request, to determine the first network element that processes the sensing request.

C52b: The fourth network element determines a first network element via a second network element.

In this embodiment, the first network element may be an AMF. The second network element may be an NRF. The sensing request includes sensing area information. In this case, the NRF may perform matching in a correspondence between the first network element and a sensing area of the first network element based on the sensing area information, to determine the first network element that processes the sensing request. The NRF provides the first network element obtained through matching for the NEF.

One of step C52a and step C52b may be selected and performed.

C53: The fourth network element sends the sensing request to the first network element.

C54: The first network element determines an access network device based on the sensing area information.

C55: The first network element sends the sensing request to the access network device.

C56a: Optionally, the access network device selects a terminal based on the sensing area information. Optionally, when a sensing capability of the access network device cannot meet the sensing request, the access network device performs step C56a. For example, when a sensing area of the access network device is inconsistent with a requested sensing area, the access network device may indicate an appropriate terminal to perform sensing, to obtain sensing data.

C56b: The access network device performs sensing to obtain sensing data.

One of step C56a and step C56b may be selected and performed. Certainly, the access network device may alternatively perform both step C56a and step C56b based on an actual case, so that the access network device and the terminal perform sensing to obtain the sensing data.

C57: Optionally, step C57 corresponds to step C56a, and after step 6a, the access network device indicates the terminal to perform sensing. The access network device sends the sensing request to the corresponding terminal, so that the terminal performs sensing. After obtaining the sensing data, the terminal provides the sensing data as a response for the access network device.

C58: After step C56b or step C57, the access network device sends a sensing response to the first network element.

C59: The first network element sends the sensing response to the fourth network element.

C510: The fourth network element sends a capability exposure response or a capability exposure notification message to the AF.

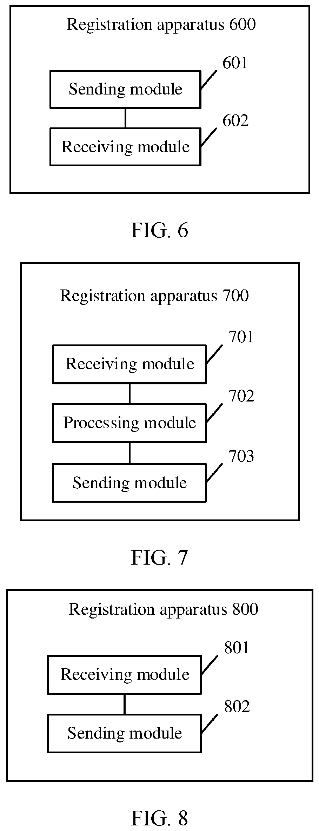

FIG. 6, FIG. 7, FIG. 8, and FIG. 9 are diagrams of structures of possible registration apparatuses according to embodiments of this application. These registration apparatuses may be configured to implement functions of the access network device, the first network element, and the terminal in the foregoing method embodiments, and therefore can also achieve beneficial effects of the foregoing method embodiments. In embodiments of this application, the registration apparatuses may be the access network device, the first network element, and the terminal, or may be modules (for example, chips) used in the access network device, the first network element, and the terminal.

As shown in FIG. 6, a registration apparatus 600 includes a sending module 601 and a receiving module 602. The registration apparatus 600 is configured to implement a function of the access network device in the method embodiment shown in FIG. 3A. Alternatively, the registration apparatus 600 may include a module configured to implement any function or operation of the access network device in the method embodiment shown in FIG. 3A. The module may be all or partially implemented by using software, hardware, firmware, or any combination thereof.

When the registration apparatus 600 is configured to implement the function of the access network device in the method embodiment shown in FIG. 3A, the sending module 601 is configured to send a first registration request to a first network element, where the first registration request includes sensing identification information of the access network device, and the first registration request is used to trigger sensing authentication and/or sensing authorization on the access network device. The receiving module 602 is configured to receive a first registration response to the first registration request from the first network element, where the first registration response includes an authentication result of the access network device and/or an authorization result of the access network device.

As shown in FIG. 7, a registration apparatus 700 includes a receiving module 701, a processing module 702, and a sending module 703. The registration apparatus 700 is configured to implement a function of the first network element in the method embodiment shown in FIG. 3A. Alternatively, the registration apparatus 700 may include a module configured to implement any function or operation of the first network element in the method embodiment shown in FIG. 3A. The module may be all or partially implemented by using software, hardware, firmware, or any combination thereof.

When the registration apparatus 700 is configured to implement the function of the first network element in the method embodiment shown in FIG. 3A, the receiving module 701 is configured to receive a first registration request from an access network device, where the first registration request includes sensing identification information of the access network device. The processing module 702 is configured to perform sensing authentication and/or sensing authorization on the access network device based on the sensing identification information of the access network device. The sending module 703 is configured to send a first registration response to the access network device, where the first registration response includes an authentication result of the access network device and/or an authorization result of the access network device.

As shown in FIG. 8, a registration apparatus 800 includes a receiving module 801 and a sending module 802. The registration apparatus 800 is configured to implement a function of the access network device in the method embodiment shown in FIG. 4A. Alternatively, the registration apparatus 800 may include a module configured to implement any function or operation of the access network device in the method embodiment shown in FIG. 4A. The module may be all or partially implemented by using software, hardware, firmware, or any combination thereof.

When the registration apparatus 800 is configured to implement the function of the access network device in the method embodiment shown in FIG. 4A, the receiving module 801 is configured to receive a second registration request of a terminal, where the second registration request includes a sensing indication. The sensing indication indicates that the terminal is configured to perform sensing. The sending module 802 is configured to send a second message to an AMF network element, where the second message includes the second registration request, and the second registration request is used to trigger sensing authentication and/or sensing authorization on the terminal. The receiving module 801 is configured to receive a second message response from the AMF network element, where the second message response includes an authentication result of the terminal and/or an authorization result of the terminal.

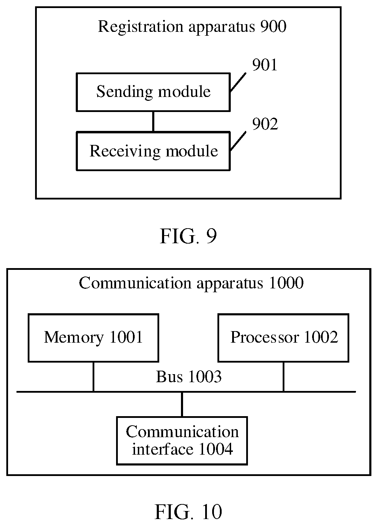

As shown in FIG. 9, a registration apparatus 900 includes a sending module 901 and a receiving module 902. The registration apparatus 900 is configured to implement a function of the terminal in the method embodiment shown in FIG. 4A. Alternatively, the registration apparatus 900 may include a module configured to implement any function or operation of the terminal in the method embodiment shown in FIG. 4A. The module may be all or partially implemented by using software, hardware, firmware, or any combination thereof.

When the registration apparatus 900 is configured to implement the function of the terminal in the method embodiment shown in FIG. 4A, the sending module 901 is configured to send a second registration request to an access network device, where the second registration request includes a sensing indication. The sensing indication indicates that the terminal is configured to perform sensing, and the second registration request is used to trigger sensing authentication and/or sensing authorization on the terminal. The receiving module 902 is configured to receive a second registration response sent by the access network device, where the second registration response is obtained based on an authentication result of the terminal and/or an authorization result of the terminal that are/is from an access and mobility management function network element.

For example, an embodiment of this application further provides a registration system, including the registration apparatus shown in FIG. 6 and the registration apparatus shown in FIG. 7.

For example, an embodiment of this application further provides a registration system, including the registration apparatus shown in FIG. 8 and the registration apparatus shown in FIG. 9.

FIG. 10 is a diagram of a structure of a communication apparatus according to an embodiment of this application.

The communication apparatus 1000 includes a memory 1001, a processor 1002, a communication interface 1004, and a bus 1003. The memory 1001, the processor 1002, and the communication interface 1004 communicate with each other through the bus 1003. There may be one or more memories 1001, and there may be one or more processors 1002.

For example, the communication apparatus 1000 may be a chip or a chip system.

The memory 1001 may be a read-only memory (Read-Only Memory, ROM), a static storage device, a dynamic storage device, or a random access memory (Random Access Memory, RAM). The memory 1001 may store a program. When the program stored in the memory 1001 is executed by the processor 1002, the processor 1002 is configured to perform steps of the registration method in any one of the foregoing embodiments.

The processor 1002 may be a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits, and is configured to execute a related program, to implement the registration method in any one of the foregoing embodiments.

The processor 1002 may alternatively be an integrated circuit chip with a signal processing capability. In an implementation process, the steps of the registration method in any embodiment of this application may be completed by using an integrated logic circuit of hardware in the processor 1002 or instructions in a form of software. The processor 1002 may alternatively be a general-purpose processor, a digital signal processor (Digital Signal Processing, DSP), an application-specific integrated circuit (ASIC), a field programmable gate array (Field Programmable Gate Array, FPGA) or another programmable logic device, a discrete gate or transistor logic device, or a discrete hardware component. The processor 1002 may implement or perform the methods, steps, and logical block diagrams disclosed in embodiments of this application. The general-purpose processor may be a microprocessor, or the processor may be any conventional processor or the like. The steps of the registration method described with reference to any embodiment of this application may be directly performed and completed by a hardware decoding processor, or may be performed and completed by using a combination of hardware and a software module in the decoding processor. The software module may be located in a mature storage medium in the art, for example, a random access memory, a flash memory, a read-only memory, a programmable read-only memory, an electrically erasable programmable memory, or a register. The storage medium is located in the memory 1001, and the processor 1002 reads information in the memory 1001 and completes the registration method in any one of the foregoing embodiments in combination with hardware of the processor 1002.

The communication interface 1004 uses a transceiver apparatus, for example but not limited to a transceiver, to implement communication between the communication apparatus 1000 and another device or a communication network. For example, the communication apparatus 1000 may obtain the second data through the communication interface 1004.

The bus 1003 may include a path for transferring information between components (for example, the memory 1001, the processor 1002, and the communication interface 1004) of the communication apparatus 1000.

It should be noted that, although only the memory, the processor, and the communication interface are shown in the communication apparatus 1000 shown in FIG. 10, in a specific implementation process, a person skilled in the art should understand that the communication apparatus 1000 further includes another component necessary for normal operation. In addition, based on a specific requirement, a person skilled in the art should understand that the communication apparatus 1000 may further include a hardware component for implementing another additional function. In addition, a person skilled in the art should understand that the communication apparatus 1000 may alternatively include only components necessary for implementing embodiments of this application, but does not necessarily include all the components shown in FIG. 10.

In several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic, a mechanical, or another form.

The units described as separate parts may or may not be physically separate, and parts displayed as units may or may not be physical units, in other words, may be located in one position, or may be distributed on a plurality of network units. Some or all of the units may be selected based on an actual requirement to achieve the objectives of the solutions in the embodiments.

In addition, functional units in embodiments of this application may be integrated into one processing unit, or each unit may exist alone physically, or two or more units are integrated into one unit.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A registration method, wherein the method comprises:
sending, by an access network device, a first registration request to a first network element, wherein the first registration request comprises sensing identification information of the access network device, and the first registration request is used to trigger sensing authentication and/or sensing authorization on the access network device; and
receiving, by the access network device, a first registration response to the first registration request from the first network element, wherein the first registration response comprises an authentication result of the access network device and/or an authorization result of the access network device.

2. The method according to claim 1, wherein the sensing identification information comprises any one of the following:
identity ID information, subscription permanent identifier SUPI information, subscription concealed identifier SUCI information, international mobile subscriber identity IMSI information, permanent equipment identifier PEI information, international mobile equipment identity IMEI information, generic public subscription identifier GPSI information, and mobile subscriber international number MSISDN information.

3. The method according to claim 1 or 2, wherein when the first network element is a sensing network element, the access network device sends the first registration request to the first network element via an access and mobility management function network element.

4. The method according to claim 3, wherein sending, by the access network device, the first registration request to the first network element via the access and mobility management function network element comprises:
sending, by the access network device, a first message to the access and mobility management function network element, wherein the first message comprises location area information of the access network device and the first registration request, so that the access and mobility management function network element determines the first network element based on the location area information of the access network device and sends the first registration request to the first network element.

5. The method according to any one of claims 1 to 4, wherein before sending, by the access network device, the first registration request to the first network element, the method further comprises:
determining, by the access network device, the first network element.

6. The method according to claim 5, wherein determining, by the access network device, the first network element comprises:
determining, by the access network device, the first network element based on local network element configuration information;
or
obtaining, by the access network device, a mapping relationship, wherein the mapping relationship is a correspondence between a network element and a serving location area of the network element; and determining the first network element based on the mapping relationship and the location area information of the access network device, wherein a location area indicated by the location area information of the access network device is located in a serving location area of the first network element.

7. The method according to claim 6, wherein the mapping relationship is obtained by the access network device from the access and mobility management function network element.

8. The method according to claim 7, wherein obtaining, by the access network device, the mapping relationship comprises:
sending, by the access network device, an access network device setting request to the access and mobility management function network element; and
receiving, by the access network device, a setting response from the access and mobility management function network element, wherein the setting response comprises the mapping relationship.

9. The method according to claim 1 or 2, wherein the first registration request is sent by the access network device to the first network element via a first message.

10. The method according to any one of claims 1 to 9, wherein the first registration request further comprises at least one of the following: location information of the access network device, sensing area information of the access network device, sensing quality of service information of the access network device, a sensing type additionally supported by the access network device, and a channel model parameter of the access network device.

11. The method according to any one of claims 1 to 10, wherein the method further comprises:
receiving, by the access network device, a sensing request from a sensing demander, wherein the sensing demander comprises at least one of the following: the first network element, an application service function network element, or a terminal device;
obtaining, by the access network device, sensing data based on the sensing request; and
providing, by the access network device, the sensing data for the sensing demander.

12. The method according to any one of claims 1 to 11, wherein the method further comprises:
sending, by the access network device, a first sensing update request to the first network element or a second network element, wherein the first sensing update request is used to request the first network element or the second network element to update sensing capability information of the access network device; and
receiving, by the access network device, a first sensing update response sent by the first network element or the second network element.

13. A registration method, wherein the method comprises:
receiving, by a first network element, a first registration request from an access network device, wherein the first registration request comprises sensing identification information of the access network device;
performing, by the first network element, sensing authentication and/or sensing authorization on the access network device based on the sensing identification information of the access network device; and
sending, by the first network element, a first registration response to the access network device, wherein the first registration response comprises an authentication result of the access network device and/or an authorization result of the access network device.

14. The method according to claim 13, wherein the sensing identification information comprises any one of the following: identity ID information, subscription permanent identifier SUPI information, subscription concealed identifier SUCI information, international mobile subscriber identity IMSI information, permanent equipment identifier PEI information, international mobile equipment identity IMEI information, generic public subscription identifier GPSI information, and mobile subscriber international number MSISDN information.

15. The method according to claim 13 or 14, wherein performing, by the first network element, sensing authentication and/or sensing authorization on the access network device based on the sensing identification information of the access network device comprises:
locally performing, by the first network element, sensing authentication and/or sensing authorization on the access network device based on the sensing identification information of the access network device;
or
performing, by the first network element, sensing authentication and/or sensing authorization on the access network device based on the sensing identification information of the access network device via a third network element.

16. The method according to any one of claims 13 to 15, wherein the method further comprises:
sending, by the first network element, a second sensing update request to a second network element, wherein the second sensing update request is used to request the second network element to update sensing capability information of the first network element; and
receiving, by the first network element, a second sensing update response sent by the second network element.

17. The method according to any one of claims 13 to 16, wherein when the first network element is a sensing network element, the first registration request is sent by the access network device to the first network element via an access and mobility management function network element.

18. The method according to any one of claims 13 to 16, wherein the first registration request is sent by the access network device to the first network element via a first message.

19. The method according to any one of claims 13 to 18, wherein the first registration request further comprises at least one of the following: location information of the access network device, sensing area information of the access network device, sensing quality of service information of the access network device, a sensing type additionally supported by the access network device, and a channel model parameter of the access network device.

20. The method according to any one of claims 13 to 19, wherein the method further comprises:
receiving, by the first network element, a first sensing update request sent by the access network device, wherein the first sensing update request is used to request the first network element to update sensing capability information of the access network device; and
sending, by the first network element, a first sensing update response to the access network device.

21. The method according to any one of claims 13 to 20, wherein the method further comprises:
sending, by the first network element, a sensing request to the access network device; and
receiving, by the first network element, a sensing response sent by the access network device.

22. The method according to claim 21, wherein the sensing request is obtained by the first network element from a fourth network element.

23. A registration method, wherein the method comprises:
receiving, by an access network device, a second registration request of a terminal, wherein the second registration request comprises a sensing indication, and the sensing indication indicates that the terminal is configured to perform sensing;
sending, by the access network device, a second message to an access and mobility management function network element, wherein the second message comprises the second registration request, and the second registration request is used to trigger sensing authentication and/or sensing authorization on the terminal; and
receiving, by the access network device, a second message response from the access and mobility management function network element, wherein the second message response comprises an authentication result of the terminal and/or an authorization result of the terminal.

24. The method according to claim 23, wherein the method further comprises:
sending, by the access network device, a second registration response to the second registration request to the terminal, wherein the second registration response is obtained based on the second message response.

25. The method according to claim 23 or 24, wherein the method further comprises:
sending, by the access network device, at least one of the following information to the terminal: configuration information of the terminal, sensing configuration information of the terminal, sensing authorization indication information, and sensing identification information of the terminal.

26. The method according to any one of claims 23 to 25, wherein the method further comprises:
sending, by the access network device, a sensing configuration request to the terminal, wherein the sensing configuration request comprises configuration information associated with a sensing service of the terminal; and
receiving, by the access network device, a sensing configuration response of the terminal.

27. The method according to claim 26, wherein the configuration information comprises at least one of the following: a sensing bandwidth, sensing frequency band indication information, sensing quality of service indication information, a sensing detection distance, sensing power, a sensing data reporting format, reporting indication information for sensing data quality information, a sensing detection sensitivity level, and the sensing identification information of the terminal.

28. The method according to claim 26 or 27, wherein the sensing configuration response comprises at least one of the following: the sensing identification information of the terminal, sensing area information of the terminal, sensing quality of service information of the terminal, a sensing type additionally supported by the terminal, location information of the terminal, and a channel model parameter of the terminal.

29. The method according to any one of claims 23 to 28, wherein the method further comprises:
sending, by the access network device, a first sensing update request to first network element or a second network element, wherein the first sensing update request is used to request the first network element or the second network element to update sensing capability information of the access network device; and
receiving, by the access network device, a first sensing update response sent by the first network element or the second network element.

30. The method according to claim 29, wherein sending, by the access network device, the first sensing update request to the first network element or the second network element comprises:
when it is determined, based on the authentication result and/or the authorization result, that the terminal performs registration successfully, sending, by the access network device, the first sensing update request to the first network element or the second network element.

31. A registration method, wherein the method comprises:
sending, by a terminal, a second registration request to an access network device, wherein the second registration request comprises a sensing indication, the sensing indication indicates that the terminal is configured to perform sensing, and the second registration request is used to trigger sensing authentication and/or sensing authorization on the terminal; and
receiving, by the terminal, a second registration response sent by the access network device, wherein the second registration response is obtained based on an authentication result of the terminal and/or an authorization result of the terminal that are/is from an access and mobility management function network element.

32. The method according to claim 31, wherein the method further comprises:
receiving, by the terminal, a sensing configuration request sent by the access network device or a fifth network element, wherein the sensing configuration request comprises configuration information associated with a sensing service of the terminal;
configuring, by the terminal, the sensing service based on the configuration information; and
sending, by the terminal, a sensing configuration response to the access network device or the fifth network element.

33. The method according to claim 31, wherein the method further comprises:
configuring, by the terminal, a sensing service based on local configuration information.

34. The method according to claim 32 or 33, wherein the configuration information comprises at least one of the following: a sensing bandwidth, sensing frequency band indication information, sensing quality of service indication information, a sensing detection distance, sensing power, a sensing data reporting format, reporting indication information for sensing data quality information, a sensing detection sensitivity level, and sensing identification information of the terminal.

35. The method according to claim 32, wherein the sensing configuration response comprises at least one of the following: sensing identification information of the terminal, sensing area information of the terminal, sensing quality of service information of the terminal, a sensing type additionally supported by the terminal, location information of the terminal, and a channel model parameter of the terminal.

36. The method according to any one of claims 31 to 35, wherein the method further comprises:
receiving, by the terminal, a sensing request sent by the access network device;
performing, by the terminal, sensing in response to the sensing request to obtain sensing data; and
sending, by the terminal, a sensing response to the access network device.

37. The method according to any one of claims 31 to 36, wherein the method further comprises:
receiving, by the terminal, at least one of the following information sent by the access network device: configuration information of the terminal, sensing configuration information of the terminal, sensing authorization indication information, and the sensing identification information of the terminal.

38. A registration apparatus, comprising a unit configured to perform the method according to any one of claims 1 to 12.

39. A registration apparatus, comprising a unit configured to perform the method according to any one of claims 13 to 22.

40. A registration apparatus, comprising a unit configured to perform the method according to any one of claims 23 to 30.

41. A registration apparatus, comprising a unit configured to perform the method according to any one of claims 31 to 37.

42. A communication apparatus, comprising a processor, wherein the processor is coupled to a memory, the memory is configured to store a computer program or instructions, and the processor is configured to execute the computer program or the instructions, to cause the communication apparatus to perform the method according to any one of claims 1 to 37.

43. A computer-readable storage medium, comprising a computer program, wherein when the computer program is run on a computer, the computer is caused to perform the method according to any one of claims 1 to 37.

44. A computer program product, wherein when the computer program product runs on a computer, the computer is caused to perform the method according to any one of claims 1 to 37.

45. A chip system, comprising a processor, configured to invoke a computer program from a memory and run the computer program, to cause a communication device on which the chip system is mounted to perform the method according to any one of claims 1 to 37.

46. A registration system, comprising the apparatus according to claim 38 and the apparatus according to claim 39.

47. A registration system, comprising the apparatus according to claim 40 and the apparatus according to claim 41.
